# EUROPEAN PATENT APPLICATION

(11) **EP 1 986 105 A2**
(43) Date of publication of application: **29.10.2008**
(21) Application number: 07708077.8
(22) Date of filing: 06.02.2007
(51) Int. Cl.: G06F 17/10

(54) **VERIFICATION CHECK SYSTEM, VERIFYING DEVICE, CHECK DEVICE, VERIFICATION CHECK METHOD, AND PROGRAM**

(30) Priority: 09.02.2006 JP 2006032650
(71) Applicant: NEC Corporation, Minato-ku Tokyo 108-8001 (JP)
(72) Inventor: TERANISHI, Isamu, Minato-ku, Tokyo 108-8001 (JP)
(74) Representative: Vossius & Partner
(86) International application number: PCT/JP2007/051959
(87) International publication number: WO 2007/091531

## Description

### Technical Field

The present invention relates to a proof verification system, a proving device, a verifying device, a proof verification method, and a program for causing a computer to execute this method for enabling a proof that some among a plurality of items of information are known and for enabling verification of the validity of such a proof.

### Background Art

A protocol by which an information processor referred to as a proving device proves to another information processor referred to as a verifying device that it knows secret information for satisfying some property is called a "proof of knowledge." The verifying device verifies the validity of the proof carried out by the proving device and determines whether the proof is valid or not.

Proof of knowledge schemes are used as components when producing various encryption protocols. Examples of direct application include authentication methods and signature methods. Both authentication methods and signature methods are techniques used for proving identity to another person on the Internet. Some authentication methods and signature methods have been put to practical use as IPSec (Security Architecture for Internet Protocol) and are highly useful in industry.

In the paper "Proofs of partial knowledge and simplified design of witness hiding protocols" (R. Cramer, I. Damgaard, and B. Schoenmakers, CRYPTO'94, LNCS 2139, Springer-Verlag, 1994, pp. 174-187 (hereinbelow referred to as Document 1)), Cramer et al. propose a proof of knowledge scheme commonly referred to as "Proof of 0r." In this method, a proving device can prove to a verifier that it knows at least k of n secrets, where n is a natural number and k is a natural number less than or equal to n.

The "proof of 0r" is necessary for realizing an authentication scheme having a form of anonymity, and the "proof of 0r" is therefore applied in various encryption protocols. The "proof of 0r" is used in, for example, the paper "k-Times Anonymous Authentication (Extended Abstract)" by Isamu Teranishi, Jun Furukawa, and Kazue Sako (ASIACRYPT 2004, LNCS 3329, Springer-Verlag, 2004, pp. 308-322 (hereinbelow referred to as Document 2)) or "A Signature Method Having Reduced Computations and Tight Safety in a Discrete Logarithm Problem" by Teranishi Isamu (Proceedings of the 2005 Symposium on Cryptography and Information Security, 3E3-4, January 2005 (hereinbelow referred to as Document 3)). Document 3 is a scheme having application in electronic-voting, electronic-cash and anonymous viewing, and is highly useful in industry.

Cramer et. al further propose a typical proof of knowledge scheme in Document 1. Elements referred to as "access structures" (see Douglas R. Stinson, Cryptography: Theory and Practice. Kyoritsu Shuppan Co., Ltd., pp. 355-356) are first determined in advance. In this scheme, it can be proven that a proving device knows a plurality of n secrets and that this plurality of secrets satisfies the above-described access structures.

The n secrets are x_1, ..., x_n.

Cramer et. al propose a proof of knowledge scheme for a case in which the properties satisfied by x_1, ..., x_n are the same.

The proof of knowledge scheme of Cramer et. al can be used in more typical cases by combining: a proof of knowledge scheme x_1, a proof of knowledge scheme x_2, ..., and a proof of knowledge scheme x_n. However, the proof of knowledge schemes of Cramer et. al can be used only when the proof of knowledge scheme x_1, the proof of knowledge scheme x_2, ..., and the proof of knowledge scheme x_n satisfy the following conditions 1 and 2:
Condition 1: The proof of knowledge scheme x_1, the proof of knowledge scheme x_2, ..., and the proof of knowledge scheme x_n are 3-move public coin proof schemes.
Condition 2: If the space for choosing a Challenge in the proof of knowledge scheme x_i is ChallengeSpace_i, then the following must be true: ChallengeSpace_1 = ... = ChallengeSpace_n

Explanations of the terms "three-move public coin proof scheme" and "Challenge," are given in the definitions described hereinbelow.

### Disclosure of the Invention

The proof of knowledge scheme of Cramer et. al can be used only when the two conditions above-described are satisfied. A scheme must be created that can obtain the same effect as the proof of knowledge scheme of Cramer et. al but that requires fewer conditions.

The present invention was achieved in view of the above-described problems and has as an object the provision of a proof verification system, a proving device, verifying device, a proof verification method, and a program for causing a computer to execute this method that can more rapidly verify the proof of the possession of secret data.

The proof verification system of the present invention for achieving the above-described object is of a configuration that includes:
a proving device that includes: a proving device memory unit that stores m (m<n) items of secret data x_{i_1}, ..., x_{i_m} of n items of secret data, elements y_1, ..., y_n of a set, and data of a cyclic group containing n elements; and a proving device control unit for taking identifiers that differ from any of identifiers i_1, ..., i_m for the n items of secret data as j_1, ..., j_p (where p = n-m), randomly choosing elements s_{j-1}, ..., s_{j_p} of the cyclic group from the proving device memory unit, taking values realized by hash function of each s_{j_v} for v=1, ..., p as challenge value Challenge_{j_v}, and carrying out a simulation of a zero-knowledge proof that takes as input y_{j_v} and Challenge_{j_v} for v=1, ... , p to generate sets of Commit values and Response values (Commit_{j_1}, Response_{j_1}), ..., (Commit_{j_p}, Response_{j_p}), using x_{i_u} and y_{i_u} for u=1, ..., m to generate Commit value Commit_{i_u}, transmitting to the outside Commit values Commit_1, ..., Commit_n composed of Commit_{j_1}, ..., Commit_{j_p} and Commit_{i_1}, ..., Commit_{i_m}, upon receiving Challenge value c from the outside, generating the remaining elements s_{i_1}, ..., s_{1_m} from the Challenge value c and s_{j_1}, ..., s_{j_p}, taking hash values at each s_i for i=1, ..., n as Challenge value Challenge_i, using y_i, Commit_i, and Challenge_i to calculate Response value Response_i, and transmitting to the outside elements s_1, ..., s_n and Response values Response_1, ... , Response_n;and
a verifying device that is communicably connected to the proving device and that includes: a verifying device memory unit that stores a plurality of random numbers and elements y_1, ..., y_n of the set; and a verifying device control unit for: upon receiving Commit values Commit_1, ..., Commit_n from the proving device, transmitting c that is chosen from the plurality of random numbers as a Challenge value to the proving device, upon receiving elements s_1, ..., s_n of the cyclic group and Response values Response_1, ..., Response_n from the proving device, verifying whether s_1, ..., s_n is secret sharing that has been generated from Challenge value c by a proper method, and if proper, taking hash values of s_1 for i=1, ..., n as Challenge value Challenge_i, verifying whether the proof statement resulting from the set (Commit_i, Challenge_i, Response_i) is a proper proof statement of y_i or not, and accepting the proof by the proving device if proper and not accepting the proof by the proving device if not proper.

Alternatively, the proof verification system of the present invention is of a configuration that include:
a proving device that includes: a proving device memory unit that stores m (m<n) items of secret data x_{i_1}, ..., x_{i_m} among n items of secret data, elements y_1, ..., y_n of a set, data of a cyclic group containing n elements, and data of a group that contains a plurality of elements; and a proving device control unit for: taking identifiers that differ from any of identifiers i_1, ..., i_m for the n items of secret data as j_1, ... , j_p (where p = n-m), upon receiving Commit value Com from the outside, storing the Commit value Com in the proving device memory unit, randomly choosing elements s_{j_1}, ..., s_{j_p} of the cyclic group from the proving device memory unit, taking values realized by a hash function of each of s_{j_v} for v=1, ..., p as challenge value Challenge_{j_v}, and carrying out a simulation of a zero-knowledge proof that takes as input elements y_{j_v} and Challenge_{j_v} for v=1, ... , p to generate the sets of Commit values and Response values (Commit_{j_1}, Response_{j_1}), ... , (Commit_{j_p}, Response_{j_p}), using x_{i_u} and y_{i_u} for u=1, ..., m to generate Commit value Commit_{i_u}, finding Commit values Commit_1, ..., Commit_n that are composed of the Commit_{j_1}, ..., Commit_{j_p} and the Commit_{i_1}, ..., Commit_{i_m}, randomly choosing elementc_2 from the group that contains a plurality of elements, transmitting to the outside element c_2 and Commit_1, ..., Commit_n, upon receiving from the outside element c_1 of the group that contains a plurality of elements for calculating the Commit value Com, verifying whether the Commit value Com is a proper commitment of the element c_1, denying continuation of the proof if not proper, but if proper, finding value c obtained by multiplying the c_1 and the c_2, generating the remaining elements s_{i_1}, ..., s_{i_m} from the s_{j_1}, ..., s_{j_p} and the value c, taking the hash value at each s_i for i=1, ..., n as a Challenge value Challenge_i, using y_i, Commit_i, and Challenge_i to calculate the Response value Response_i, and transmitting to the verifying device elements s_1, ..., s_n and Response values Response_1, ..., Response_n; and
a verifying device that is communicably connected to the proving device and that includes: a verifying device memory unit that stores data of a group that contains a plurality of elements; and a verifying device control unit for: randomly choosing element c_1 from the group that contains a plurality of elements, calculating Commit value Com of the element c_1 to transmit to the proving device, upon receiving element c_2 of the group that contains a plurality of elements and Commit values Commit_1, ..., Commit_n from the proving device, transmitting the elements c_1 to the proving device, upon receiving elements s_1, ..., s_n of the cyclic group and Response values Response_1, ..., Response_n from the proving device, finding a value c obtained by multiplying c_1 and c_2, verifying whether s_1, ..., s_n is secret sharing that has been generated from the value c by a proper method, if proper, taking hash values of element s_i for i=1, ..., n as Challenge value Challenge_i, verifying whether the proof statement resulting from the set (Commit_i, Challenge_i Response_i) is a proper proof statement or not, and accepting the proof realized by the proving device if proper and not accepting the proof realized by the proving device if not proper.

Alternatively, the proof verification system of the present invention is of a configuration that includes:
a proving device that includes: a proving device memory unit that stores m (m<n) items of secret data x_{i_1}, ..., x_{i_m} of n items of secret data, elements y_1, ..., y_n of a set, and data of a cyclic group containing n elements; and a proving device control unit for: taking identifiers that differ from any of identifiers i_1, ..., i_m for the n items of secret data as j_1, ..., j_p (where p = n-m), randomly choosing elements s_{j_1}, ..., s_{j_p} of the cyclic group from the proving device memory unit, taking values realized by a hash function of each of s_{j_v} for v=1, ..., p as a Challenge value Challenge_{j_v}, and carrying out a simulation of a zero-knowledge proof that takes as input the elements y_{j_v} and the Challenge_{j_v} for v=1, ..., p to generate the sets of Commit values and Response values (Commit_{j_1}, Response_{j_1}), ..., (Commit_{j_p}, Response_{j_p}), using x_{i_u} and y_{i_u} for u=1, ..., m to generate Commit value Commit_{i_u}, finding Commit values Commit_1, ..., Commit_n that are composed of the Commit_{j_1}, ..., Commit_{j_p} and the Commit_{i_1}, ..., Commit_{i_m}, taking a hash value of data that contain Commit_1, ..., Commit_n as c, generating the remaining elements s_{i_1}, ..., s_{i_m} from hash value c and s_{j_1}, ..., s_{j_p}, taking the hash values at each s_i for i=1, ..., n as a Challenge value Challenge_i, using y_i, Commit_i, and Challenge_i to calculate a Response value Response_i, and transmitting to the outside elements s_1, ..., s_n and Response values Response_1, ..., Response_n; and
a verifying device that is communicably connected to the proving device and that includes a verifying device memory unit that stores element y_1, ..., y_n of the set, and a verifying device control unit for: upon receiving elements s_1, ..., s_n of the cyclic group, Commit values Commit_1, ..., Commit_n, and Response values Response_1, ..., Response_n from the proving device, taking Hash values of data that include Commit_1, ..., Commit_n as value c, verifying whether s_1, ..., s_n is secret sharing generated by a proper method from the hash value c, taking the hash value of element s_i for i=1, ..., n as a Challenge value Challenge_i if proper, verifying whether the proof statement resulting from the set (Commit_i, Challenge_i, Response_i) is a proper proof statement of y_i or not, and accepting the proof realized by the proving device if proper and not accepting the proof realized by the proving device if not proper.

In the present invention, Commit values from the proving device are transmitted to the verifying device, Response values to the Challenge values transmitted from the verifying device to the proving device, are transmitted to the verifying device from the proving device, and the proof statement of the proving device is verified in the verifying device. In this way, it can be verified whether the proving device is properly holding secret data or not. As a result, the proving device can prove to the verifying device that the proving device is holding m items of n items of secret data. Verification can be realized by satisfying one condition, in contrast to the proof of knowledge scheme that required two conditions in the related art.

### Brief Description of the Drawings

FIG. 1 is a block diagram showing an example of the configuration of the proof verification system in the first exemplary embodiment;
FIG. 2 is a flow chart showing the data transmission/reception procedures of the proof verification system in the first exemplary embodiment;
FIG. 3 is a flow chart showing the procedure of the Commit calculation means of the proving device in the first exemplary embodiment;
FIG. 4 is a flow chart showing the procedure of the Challenge calculation means of the verifying device in the first exemplary embodiment;
FIG. 5 is a flow chart showing the procedure of the Response calculation means of the proving device in the first exemplary embodiment;
FIG. 6 is a flow chart showing the procedure of the verifying means of the verifying device in the first exemplary embodiment;
FIG. 7 is a block diagram showing an example of the configuration of the proof verification system in the second exemplary embodiment;
FIG. 8 is a flow chart showing the data transmission/reception procedures of the proof verification system in the second exemplary embodiment;
FIG. 9 is a flow chart showing the data transmission/reception procedures of the proof verification system in the second exemplary embodiment;
FIG. 10 is a flow chart showing the procedure of the Challenge-Commit calculation means of the verifying device in the second exemplary embodiment;
FIG. 11 is a flow chart showing the procedure of the Commit calculation means of the proving device in the second exemplary embodiment;
FIG. 12 is a flow chart showing the procedure of the Challenge calculation means of the verifying device in the second exemplary embodiment;
FIG. 13 is a flow chart showing the procedure of the Response calculation means of the proving device in the second exemplary embodiment;
FIG. 14 is a flow chart showing the procedure of the verifying means of the verifying device in the second exemplary embodiment;
FIG. 15 is a block diagram showing an example of the configuration of the proof verification system in the third exemplary embodiment;
FIG. 16 is a flow chart showing the data transmission/reception procedures of the proof verification system in the third exemplary embodiment;
FIG. 17 is a flow chart showing the procedure of the proof statement creation means of the proving device in the third exemplary embodiment;
FIG. 18 is a flow chart showing the procedure of the Challenge calculation means of the proving device in the third exemplary embodiment; and
FIG. 19 is a flow chart showing the procedure of the verifying means of the verifying device in the third exemplary embodiment.

### Explanation of Reference Numbers

- 100: proving device
- 101: proving device memory unit
- 102: proving device control unit
- 200: verifying device
- 201: verifying device memory unit
- 202: verifying device control unit

### Best Mode for Carrying Out the Invention

### Definitions

### Three-move public coin proof scheme:

X and Y are sets. When the proof statement of (Y, X, FuncCommit, Hash, FuncResponse, ChallengeSpace, Verify, Simulator) satisfies the following properties 1, ...,7, (Y, X, FuncCommit, Hash, FuncResponse, Verify, Simulator) is said to be a three-move public coin proof scheme.
1. The set of FuncCommit, Hash, FuncResponse, Simulator, and Verify are functions.
2. ChallengeSpace is a set.
3. FuncCommit takes the elements of YxX as input and supplies data Commit and State as output.
4. Hash is a hash function that takes the value of ChallengeSpace.
5. (y, x) are assumed to be elements of YxX, and Challenge is assumed to be an element of ChallengeSpace. When y, x, Commit, Challenge, and State are applied as input, FuncResponse supplies Response as output.
6. When y, Commit, Challenge, and Response are applied as input, Verify supplies "Accept" or "Reject" as output.
7. When elements of Y are applied as input, Simulator supplies the set (Commit, Challenge, Response) as output.

The challenge value, Challenge, is inquiry information directed to the device of the communication partner for testing what response the device of the communication partner gives, and this is typically known to be a random number. The commit value, Commit, is information sent to the device of the communication partner that, although related to the secret data held by its own device, is information such that the secret data cannot be directly known from the commit value. The response value, Response, is information that is returned to the device of the transmission origin of the challenge value, Challenge, and is the response to the inquiry of the challenge value.

### Example of a three-move public coin proof scheme:

The value q is assumed to be a prime, G is assumed to be a finite group of order q, m is a natural number, and H = G^m.

When (Y, X, FuncCommit, Hash, FuncResponse, ChallengeSpace, Verify, Simulator) are determined according to 1, ..., 8 below, (Y, X, FuncCommit, Hash, FuncResponse, ChallengeSpace, Verify, Simulator) is a three-move public-coin proof scheme.
1. Y = H×H
2. X is the cyclic group (Z/qZ) of order q.
3. ChallengeSpace = (Z/qZ)
4. y = ((g_1= ..., g_m), (h_1, ..., h_m)) are elements of Y, and x is an element of X. When the elements (y, x) of YxX are applied as input, FuncCommit randomly chooses the element r of (Z/qZ), and calculates (C_1, ..., C_n) = (g_1^{r}, ..., g_m^{r}) and supplies Commit = (C_1, ..., C_n) and State = r as output.
5. Hash is a hash function that takes the value ChallengeSpace = (Z/qZ).
6. "c" is an element of (Z/qZ), and Challenge = c. When the element y of Y = ((g_1, ... , g_m), (h_1, ... , h_m)), the element x of X, Commit = (C_1, ..., C_n), Challenge = c, and State = r are applied as input, FuncResponse calculates ρ = cx + r mod q and supplies Response = ρ as output.
7. When y = ((g_1, ..., g_m), (h_1, ..., h_m)), Commit = (C_1, ..., C_n), Challenge = c, and Response = ρ are applied as input, Verify calculates (g_1^{ρ}, ..., g_m^{ρ} and (h_1^{c}C_1, ..., h_m^{c}C_m). If g_1^{ρ}, ... , g_m^{ρ}) = (h_1^{c}C_1, ..., h_n^{c} C_n) is true, Verify supplies "accept" but otherwise supplies "reject" as output.
8. When y = ((g_1, ..., g_m, (h_1, ..., h_m)) is applied as input, Simulator randomly chooses c and ρ, and takes (C_1, ..., C_m) = (g_1^{ρ} h_1^{-c}, ..., g_m^{ρ} h_m^{-c}) and supplies Commit = (C_1, ..., C_m), Challenge = c, Response = ρ as output.

### Three-move public coin proof scheme relating to R:

R is a relational expression of YxX. When the three-move public-coin proof scheme (Y, X, FuncCommit, Hash, FuncResponse, Verify, Simulator) satisfies the following properties 1 and 2, (Y, X, FuncCommit, Hash, FuncResponse, Verify, Simulator) is a three-move public-coin proof scheme relating to R.
1. If (Commit, State) = FuncCommit(y, x), Challenge = Hash(y, Commit), Response = FuncResponse(y, Commit, Challenge, State) for any (y, x) that satisfies R(y, x), then Verify(y, Commit, Challenge, Response) = accept.
2. If (Commit, Challenge, Response) = Simulator(y) for any element y of Y, then Verify (y, Commit, Challenge, Response) = accept.

The present invention can be used for any three-move public-coin proof scheme. However, for practical purposes, the three-move public-coin proof scheme is preferably for some relational expression R.

### Example of a three-move public-coin proof scheme relating to R:

(Y, X, FuncCommit, Hash, FuncResponse, ChallengeSpace, Verify, Simulator) is determined similarly to the example of a three-move public-coin proof scheme. If R(y, x) is the relational expression "(h_1, ..., h_m) = (g_1^{x}, ..., g_m^{x})" for element x of X and element y of Y = (g_1, ..., g_m), (h_1, ..., h_m)), then (Y, X, FuncCommit, Hash, FuncResponse, ChallengeSpace, Verify, Simulator) is the three-move public-coin proof scheme relating to R.

### Access structure:

S is a finite set of integers. When the family Γ that is a subset of S satisfies the following property 1, Γ is the access structure on S.
1. For any subsets A and B of S, if A is the element of Γ, and moreover, the subset of B, B is the element of Γ.

### Example 1 of an access structure:

It is assumed that n is a natural number, S = {1, ..., n}, and Γ = {S}. In this case, Γ is the access structure on S.

### Example 2 of an access structure:

It is assumed that n is a natural number and that k is a natural number not greater than n. S = {1, ..., n}, and Γ is a subset of S and Γ is the set having at least k elements. In this case, Γ is the access structure on S.

### Secret sharing scheme:

It is assumed that S is a finite set, Γ is an access structure on S, and n is the number of elements of S. When the set (FuncShar, FuncReconstruct, SharSp, KeySp) satisfies the following properties 1, ..., 5, (FuncShar, FuncReconstruct, SharSp, KeySp) is said to be a secret sharing scheme having the access structure Γ.
1. FuncShar and FuncReconstruct are functions.
2. SharSp and KeySp are sets.
3. When the element c of KeySp is applied as input, FuncShar supplies the element s_1, ..., s_n of SharSp as output.
4. When the set (i_1, u_1), ... , (i_m, u_m) of the elements of SharSp and integers are applied as input, FuncShar either supplies elements of KeySp or supplies the character string "reject" as output.
5. It is assumed that c is an element of KeySp. The output of FuncShar when c is applied as input is s_1, ..., s_n. The elements of Γ are assumed to be A = {i_1, ..., i_m}. When (i_1, s_{i_1}), ..., (i_m, s_{i_m}) are applied as input to FuncShar at this time, FuncShar supplies c as output.

### Examples 1 of a secret sharing scheme:

n, S, and Γ are determined as described in Example 1 of an access structure. in addition, q is assumed to be a natural number. When (FuncShar, FuncReconstruct, SharSp, KeySp) is determined as in 1, ..., 4 below, (FuncShar, FuncReconstruct, SharSp, KeySp) is a secret sharing scheme.
1. SharSp is assumed to be the cyclic group (Z/qZ).
2. KeySp is assumed to be the cyclic group (Z/qZ).
3. When the element c of KeySp is applied as input, FuncShar randomly chooses elements s_1, ..., s_{n-1} of SharSp, calculates s_n = c- s_1, ..., s_{n-1} mod q and supplies (s_1, ..., s_n) as output.
4. When ((1, s_1), ... , (n, s_n)) is applied as input, FuncReconstruct supplies s_1+ ... +s_n as output.

### Example 2 of a secret sharing scheme:

n, k, S, and Γ are determined as explained in Example 2 of an access structure. In addition, q is assumed to be a natural number. When (FuncShar, FuncReconstruct, SharSp, KeySp) is determined as shown in 1, ..., 4 below, (FuncShar, FuncReconstruct, SharSp, KeySp) is a secret sharing scheme.
1. SharSp is assumed to be the cyclic group (Z/qZ).
2. KeySp is assumed to be the cyclic group (Z/qZ).
3. When element c of KeySp is applied as input, FuncShar randomly chooses elements a_1, ..., a_{k-1} of (Z/qZ), determines polynomial expression as f(u) = c+ a_1x + a_2x^2 + ... + a_{k-1}x^{k-1} mod q, assumes s_1 = f(1) mod q, ..., s_n = f(n) mod q, and supplies (s_1, ..., s_n) as output.
4. When ((i_1, s_{i_1}), ..., (i_k, s_{k})) are applied as input, FuncReconstruct chooses a value such that f(i_1) = s_{i_1} mod q, ..., f(i_{k}) = s_{i_k} mod q in the polynomial expression f(u), assumes c = f(0) mod q, and supplies c as output.

### Special secret sharing scheme:

It is assumed that S is a finite set, that Γ is an access structure on S, and that n is the number of elements of S. When the set (FuncShar, FuncReconstruct, FuncReShar, FuncVerShar, SharSp, KeySp) satisfies the following properties 1, ..., 4, (FuncShar, FuncReconstruct, FuncVerShar, SharSp, KeySp) is a special secret sharing scheme having the access structure Γ.
1. (FuncShar, FuncReconstruct, SharSp, KeySp) is secret sharing.
2. It is assumed that A={i_1, ..., i_m} are the elements of Γ, that s_{i_1}, ..., s_{i_m} are elements of SharSp, and that I=n-m. The set resulting from subtracting A from S, is B = {j_1, ..., j_1}. Finally, c is an element of KeySp. When c and (i_1, s_{i_1}), ..., (i_m, s_{i_m}) are applied as input to FuncReShar, FuncReShar either supplies the set (j_1, s_{j_1}), ..., (j_l, s_{j_l}) of the elements of S and the elements of Sharp, or supplies "reject" as output.
3. When the elements s_1, ..., s_n of SharSp and the element c of KeySp are applied as input, FuncVerShar supplies either the character string "accept" or the character string "reject" as output.
4. It is assumed that c is an element of KeySp and that the output of FuncShar is s_1, ..., s_n when c is applied as input. At this time, VerSharSp(s_1, ..., s_n, c) = accept.

### Example 1 of special secret sharing scheme:

The values n, S, and Γ are determined as described in Example 1 of the access structure. In addition, q is assumed to be a natural number. (FuncShar, FuncReconstruct, SharSp, KeySp) is determined as described in Example 1 of a secret sharing scheme.
1. It is assumed that the elements of Γ are A = {i_1, ..., i_m}, that s_{i_1}, ..., s_{j_m} are the elements of SharSp, that l = n-m, that the set resulting from subtracting A from S is B = {j_1, ..., j_l}, and further, that c is an element of KeySp. When c and (i_1, s_{i_1}), ... , (i_m, s_{i_m}) are applied as input, FuncReShar randomly chooses s_{j_1}, ..., s_{j_{l-1}}, assumes s_{j_l} = c- (s_1 + ... + s_{j_{l-1}}+ s_{j_{j+1}}+ ... + s_n) mod q, and supplies (j_1, s_{j_1}), ... , (j_l, s_{j_l}) as output.
2. When the elements s_1, ..., s_n of SharSp and element c of KeySp are applied as input, FuncVerShar calculates s_1+ ... + s_n mod q, and supplies "accept" if c = s_1 + ... + s_n mod q and otherwise supplies "reject" as output.

### Example 2 of special secret sharing scheme:

The values n, k, S, and Γ are determined as explained in Example 2 of access structures. In addition, q is assumed to be a natural number. (FuncShar, FuncReconstruct, SharSp, KeySp) is determined as described in Example 2 of a secret sharing scheme. When (FuncReShar, FuncVerShar) is determined as shown in the following 1 and 2, (FuncShar, FuncReconstruct, FuncReShar, FuncVerShar, Sharp, KeySp) is a special secret sharing scheme having access structure Γ.
1. It is assumed that A = {i_1, ..., i_m} are elements of Γ, that s_{j_1}, ... , s_{i_m} are elements of SharSp, that I = n-m, that the set resulting from subtracting A from S is B = {j_1, ..., j_I}, and further, that c is an element of KeySp. When c and (i_1, s_{i_1}), ..., (i_m, s_{i_m}) are applied as input, FuncReShar searches for values such that f(0) = c mod q and f(i_1) = s_{i_1} mod q, ..., f(i_m) = s_{i_m} mod q in the polynomial expression f.
2. If such an f does not exist, FuncReShar supplies "reject" as output. If such an f does exist, FuncReShar supplies s_{j_1} = f(j_1) mod q, ..., s_{j_l} = f(j_l) mod q and (j_1, s_{j_1}), ..., (j_l, s_{j_l}) as output.
3. When elements s_1, ..., s_n of SharSp and element c of KeySp are applied as input, FuncVerShar searches for values such that f(0) = c mod q, f(1) = s_1 mod q, ... , and f(n) = s_n mod q in polynomial f. If such an f exists, FuncVerShar supplies "accept" as output and otherwise supplies "reject" as output.

### Commitment Scheme:

When (C, FuncGen, FuncCom, FuncComVer) satisfies the following 1, ..., 6, (C, FuncGen, FuncCom, FuncComVer) is said to be a commitment scheme.
1. C is assumed to be a set.
2. FuncGen, FuncCom, and FuncComVer are functions.
3. FuncGen supplies DomPar as output.
4. When DomPar and an element c of C are applied as input, FuncCom supplies Com and ComState as output.
5. When DomPar, an elements c of C, data Com' and data ComState' are applied as input, FuncComVer supplies the character string "accept" or the character string "reject" as output.
6. It is assumed that c is an element of C and DomPar is the output of FuncGen. The output of FuncCom when DomPar and c are applied as input is Com and ComState. When DomPar, c, Com, and ComState are applied as input at this time, FuncComVer supplies "accept" as output.

### Example of a Commitment Scheme:

It is assumed that q is a prime and that G is a finite group of order q. If (C, FuncGen, FuncCom, FuncComVer) is determined as next described, (C, FuncGen, FuncCom, FuncComVer) is a commitment scheme.
1. C = (Z/qZ)
2. FuncGen is a function for choosing two elements g and h of G and supplying DomPar = (g, h) as output.
3. When DomPar = (g, h) and an element c of C are applied as input, FuncCom randomly chooses an element r of (Z/qZ) and supplies Com = g^c h^r and ComState = r as output.
4. When DomPar = (g, h), an element c of C, Com, and ComState r are applied as input, FuncComVer calculates g^c h^r, and supplies "accept" as output if Com = g^c h^r and otherwise supplies "reject" as output.

### First exemplary embodiment

### Device Configuration

Explanation next regards the configuration of the proof verification system of the present exemplary embodiment.

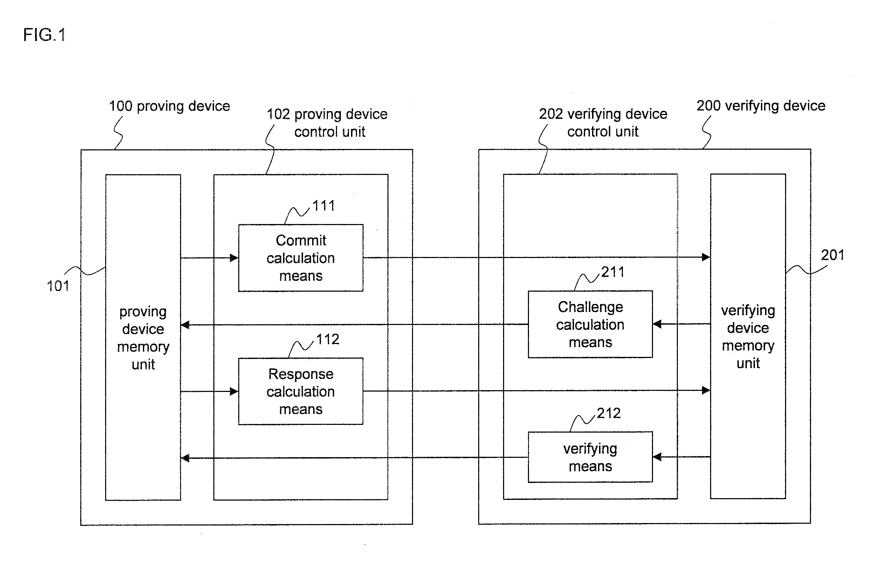

FIG. 1 is a block diagram showing an example of the configuration of the proof verification system of the present exemplary embodiment. As shown in FIG. 1, the proof verification system includes: proving device 100 for carrying out a proof, and verifying device 200 for verification. Proving device 100 and verifying device 200 are communicably connected by way of a communication network (not shown).
Proving device 100 includes proving device control unit 102, proving device memory unit 101, and proving device communication unit (not shown). Proving device control unit 102 includes Commit calculation means 111 and Response calculation means 112.
Verifying device 200 includes verifying device control unit 202, verifying device memory unlit 201, and verifying device communication unit (not shown). Verifying device control unit 202 includes Challenge calculation means 211 and Response calculation means 112.

### Device packaging:

The control unit of each device implements control of the communication unit, control of the memory unit, and arithmetic processing of data. A CPU (Central Processing Unit) for executing prescribed processes in accordance with a program and memory for storing programs are provided in the control units. Commit calculation means 111, Response calculation means 112, Challenge calculation means 211, and verifying means 212 are configured virtually in a computer through the execution of a program by a CPU. As an example, the Internet or a LAN (Local Area Network) can be used as the communication network. The communication network may be either wireless or cable, or may be a combination of both wireless and cable. In FIG. 1, the communication units of each device are omitted from the figure to clarify flow of information between devices.
A hard disk or semiconductor memory can be used for the memory unit.

### Symbols:

G is an additive group, and Hash is a hash function that takes values in G. R_i is a relational expression with respect to i=1, ..., n, and y_i is data with respect to i=1, ..., n. (Y_i, X i, FuncCommit_i, Hash_i, FuncResponse_i, ChallengeSpace_i, Verify_i, Simulator_i) for i= 1, ..., n is a three-move public-coin proof scheme. (FuncShar, FuncReconstruct, FuncReShar, FuncVerShar, SharSp, KeySp) is a special secret sharing scheme.
Finally, n is assumed to be a natural number, S = {1, ..., n}, Γ is an access structure on S, and A = {i_1, ..., i_m} are elements of Γ. It is then assumed that p = n-m. The set obtained by subtracting A from S is B = {j_1, ..., j_p}. H_i is assumed to be the hash function from SharSp to ChallengeSpace_i. Simulator_2 is a zero-knowledge proof Simulator. A zero-knowledge proof Simulator is the same as in the related art and a detailed explanation is therefore here omitted.

### Premises regarding the use of the first exemplary embodiment:

Elements x_{i_1}, ..., x_{i_m} of X and elements y_1, ..., y_n of Y are saved in proving device memory unit 101. These x_{i_1}, ..., x_{i_m} correspond to the m items of secret data among the n items of secret data. Elements y_1, ..., y_n of Y are saved in verifying device memory unit 201. When (Y_i, X_i, FuncCommit_i, Hash_i, FuncResponse_i, ChallengeSpace_i, Verify_i, Simulator_i) is the three-move public-coin proof scheme relating to relational expression R_i, R(y_j, x_j) is preferably satisfied.

### The transmission and reception of data:

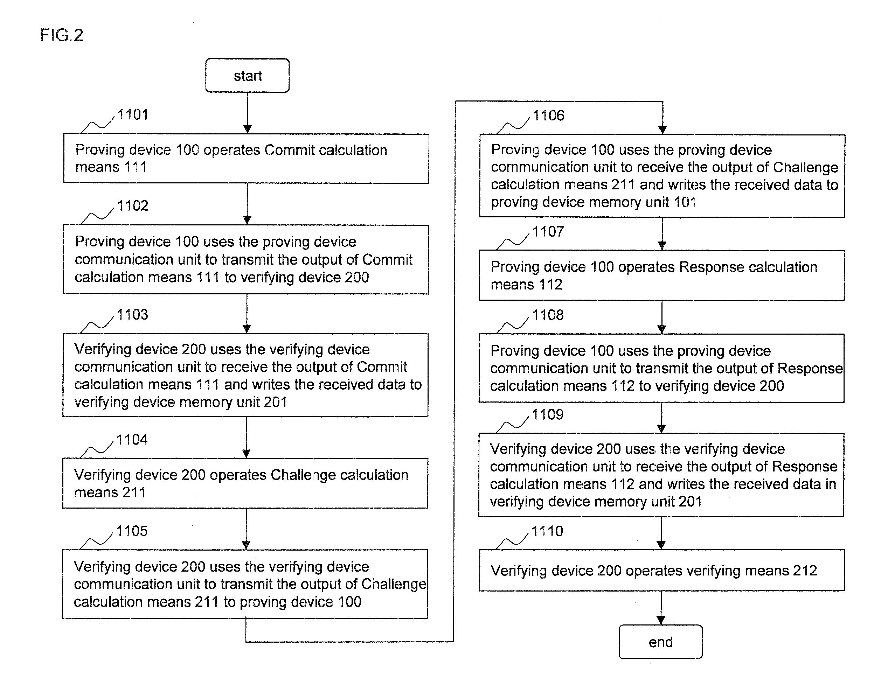

Proving device 100 and verifying device 200 carry out transmission and reception of data in the order of Prot1-1, ..., Prot1-10 as described hereinbelow. FIG. 2 is a flow chart showing the operations for transmitting and receiving data.
Prot1-1: Proving device 100 operates Commit calculation means 111 (Step 1101).
Prot1-2: Proving device 100 uses the proving device communication unit to transmit the output of Commit calculation means 111 to verifying device 200 (Step 1102).
Prot1-3: Verifying device 200 uses the verifying device communication unit to receive the output of Commit calculation means 111 and writes the received data to verifying device memory unit 201 (Step 1103).
Prot1-4: Verifying device 200 operates Challenge calculation means 211 (Step 1104).
Prot1-5: Verifying device 200 uses the verifying device communication unit to transmit the output of Challenge calculation means 211 to proving device 100 (Step 1105).
Prot1-6: Proving device 100 uses the proving device communication unit to receive the output of Challenge calculation means 211 and writes the received data to proving device memory unit 101 (Step 1106).
Prot1-7: Proving device 100 operates Response calculation means 112 (Step 1107).
Prot1-8: Proving device 100 uses the proving device communication unit to transmit the output of Response calculation means 112 to verifying device 200 (Step 1108).
Prot1-9: Verifying device 200 uses the verifying device communication unit to receive the output of Response calculation means 112 and writes the received data in verifying device memory unit 201 (Step 1109).
Prot1-10: Verifying device 200 operates verifying means 212 (Step 1110).

### Commit calculation means 111:

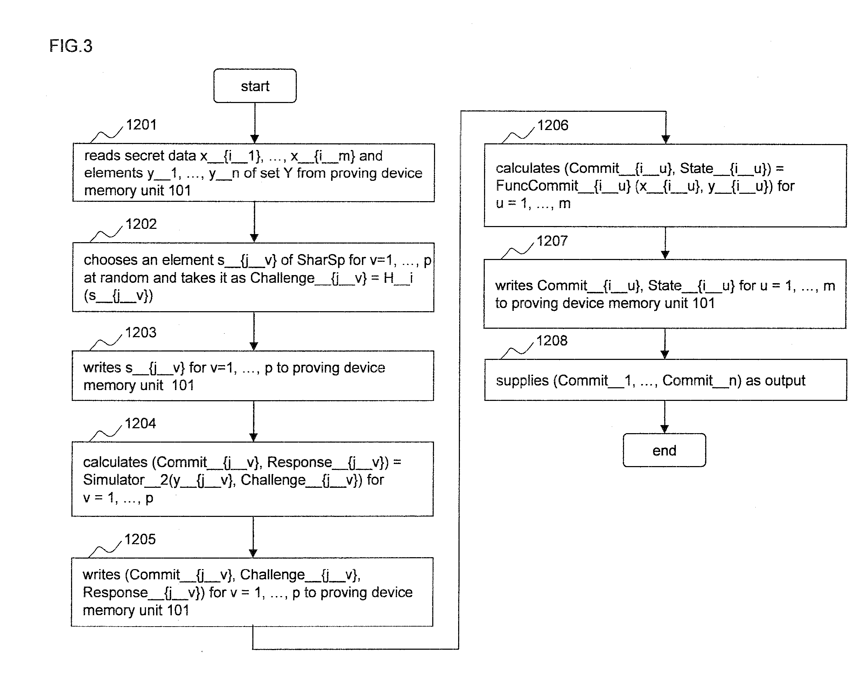

Proving device 100 operates the means described below in the order of Com1-1, ..., Com1-8. FIG. 3 is a flow chart showing the procedure of Commit calculation means 111.
Com1-1: Secret data x_{i_1}, ..., x_{i_m} and elements y_1, ..., y_n of set Y are read from proving device memory unit 101 (Step 1201).
Com 1-2: An element s_{j_v} of SharSp for v=1, ..., p is chosen at random and taken as Challenge_{j_v} = H_i(s_{j_v}) (Step 1202).
Com1-3: s_{j_v} for v=1, ..., p is written to proving device memory unit 101 (Step 1203).
Com1-4: (Commit_{j_v}, Response_{j_v}) = Simulator_2(y_{j_v}, Challenge_{j_v}) for v = 1, ..., p is calculated (Step 1204).
Com1-5: (Commit_{j_v}, Challenge_{j_v}, Response_{j_v}) for v = 1, ..., p is written to proving device memory unit 101 (Step 1205).
Com1-6: (Commit_{i_u}, State_{i_u}) = FuncCommit_{i_u} (x_{i_u}, y_{i_u}) for u = 1, ..., m is calculated (Step 1206).
Com1-7: Commit_{i_u}, State_{i_u} for u = 1, ..., m is written to proving device memory unit 101 (Step 1207).
Com1-8: (Commit_1, ..., Commit_n) is supplied as output (Step 1208).

### Challenge calculation means 211:

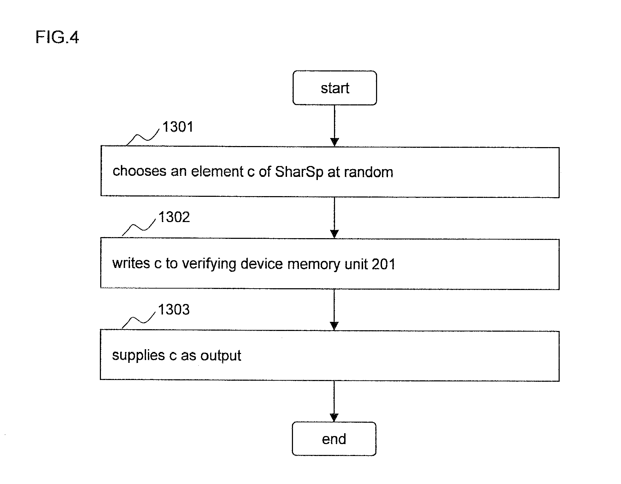

Verifying device 200 operates the means Cha1-1, ..., Cha1-3 described below. FIG. 4 is a flow chart showing the procedure of Challenge calculation means 211.
Cha1-1: An element c of SharSp is chosen at random (Step 1301).
Cha1-2: c is written to the verifying device memory unit (Step 1302)
Cha1-3: c is supplied as output (Step 1303).

### Response calculation means 112:

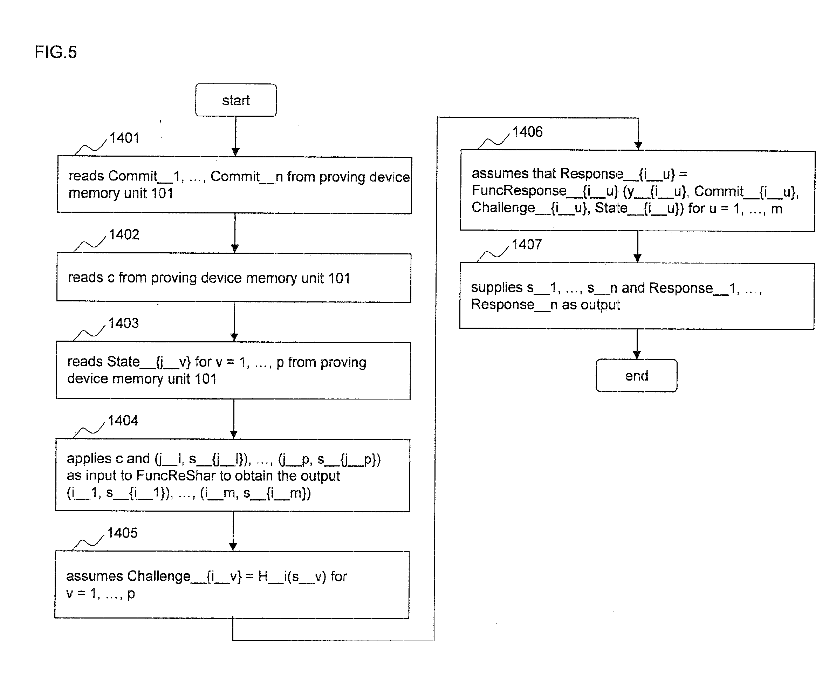

Proving device 100 operates the means Res1-1, ..., Res1-7 described below in order. FIG. 5 is a flow chart showing the procedure of Response calculation means 112.
Res1-1: Commit_1, ..., Commit_n are read from proving device memory unit 101 (Step 1401).
Res1-2: c is read from proving device memory unit 101 (Step 1402)
Res1-3: State_{j_v} for v = 1, ..., p is read from proving device memory unit 101 (Step 1403).
Res1-4: c and (j_I, s_{j_I}), ..., (j_p, s_{j_p}) are applied as input to FuncReShar to obtain the output (i_1, s_{i_1}), ..., (i_m, s_{i_m}) (Step 1404).
Res1-5: Challenge_{i-v} = H_i(s_v) for v = 1, ..., p is assumed (Step 1405).
Res1-6: For u = 1, ..., m, it is assumed that Response_{i_u} = FuncResponse_{i_u} (y_{i_u}, Commit_{i_u}, Challenge_{i_u}, State_{i_u}) (Step 1406).
Res1-7: s_1, ..., s_n and Response_1, ..., Response_n are supplied as output (Step 1407).

### Verifying means 212:

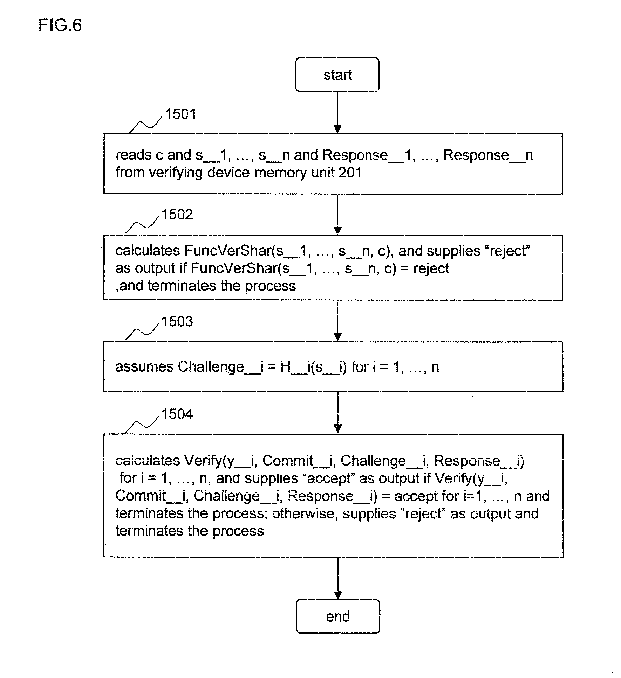

Verifying device 200 operates the means Ver1-1, ..., Ver1-4 described below. FIG. 6 is a flow chart showing the procedure of verifying means 212.
Ver1-1: c and s_1, ... , s_n and Response)_1, ..., Response_n are read from verifying device memory unit 201 (Step 1501).
Ver1-2: FuncVerShar(s_1, ..., s_n, c) is calculated, and if FuncVerShar(s_1, ..., s_n, c) = reject, "reject" is supplied as output and the process terminates (Step 1502).
Ver1-3: Challenge_i = H_i(s_i) is assumed for i = 1, ..., n (Step 1503).
Ver1-4: Verify(y_i, Commit_i, Challenge_i, Response_i) for i = 1, ..., n is calculated. If Verify(y_i, Commit_i, Challenge_i, Response_i) = accept for i=1, ..., n, "accept" is supplied as output and the process terminates; otherwise, "reject" is supplied as output and the process terminates (Step 1504).

In the proof verification system of the present exemplary embodiment, it can be proven to verifying device 200 that proving device 100 holds m items of n items of secret data. As a result, only one condition need be satisfied for the proof of knowledge scheme that requires two conditions that was disclosed in Document 1.

### Second exemplary embodiment

### Device configuration:

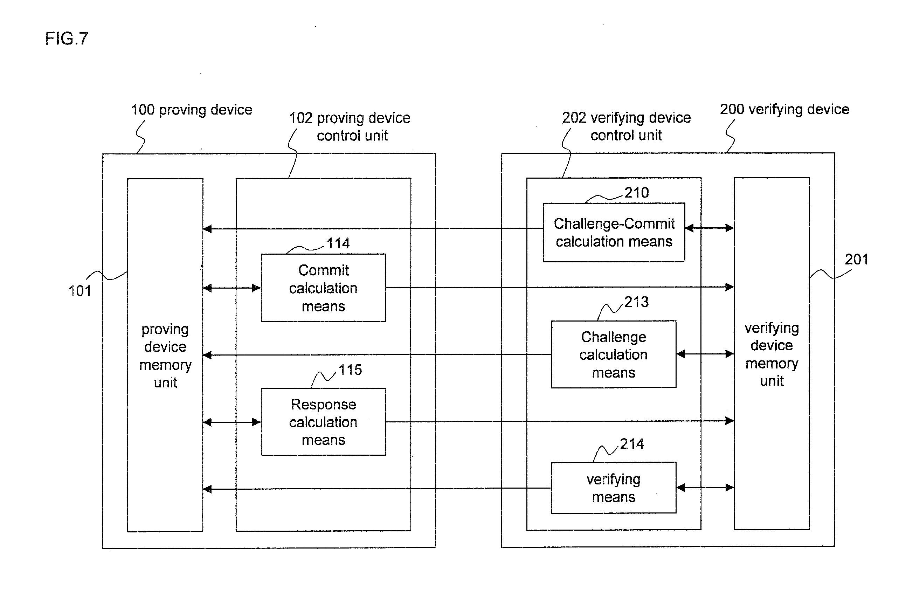

Explanation next regards the configuration of the proof verification system of the present exemplary embodiment. Detailed explanation regarding configuration equivalent to the first exemplary embodiment is here omitted. FIG. 7 is a block diagram showing an example of the configuration of the proof verification system of the present exemplary embodiment.
As shown in FIG. 7, the proof verification system includes proving device 100 for carrying out proofs and verifying device 200 for carrying out verification. Proving device 100 and verifying device 200 are communicable connected by way of a communication network (not shown).
Proving device 100 includes proving device control unit 102, proving device memory unit 101, and proving device communication unit (not shown). Proving device control unit 102 includes Commit calculation means 114 and Response calculation means 115.
Verifying device 200 includes verifying device control unit 202, verifying device memory unit 201, and verifying device communication unit (not shown). Verifying device control unit 202 includes Challenge-Commit calculation means 210, Challenge calculation means 213, and verifying means 214.

### Device Packaging:

A CPU for executing prescribed processes in accordance with a program and a memory for storing the program are provided in the control unit of each device. Commit calculation means 114, Response calculation means 115, Challenge-Commit calculation means 210, Challenge calculation means 213, and verifying means 214 are realized virtually in a computer through the execution of a program by a CPU. The configuration is otherwise equivalent to that of the first exemplary embodiment, and detailed explanation is therefore here omitted.

### Symbols:

The same symbols are used as in the first exemplary embodiment. C = ChallengeSp, and (C, FuncGen, FuncCom, FuncComVer) is the commitment scheme.

### Premises regarding the use of the second exemplary embodiment:

The same premises apply as in the first exemplary embodiment. The following two assumptions also apply:
1. ChallengeSp is a group.
2. The output DomPar of FuncGen is shared in advance by proving device 100 and verifying device 200.

### Transmission and reception of data:

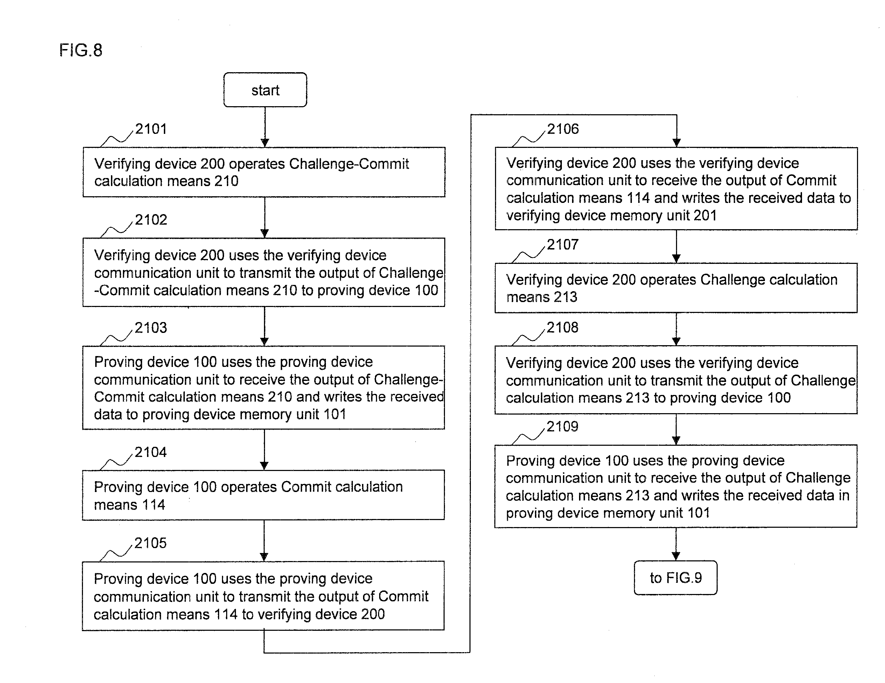

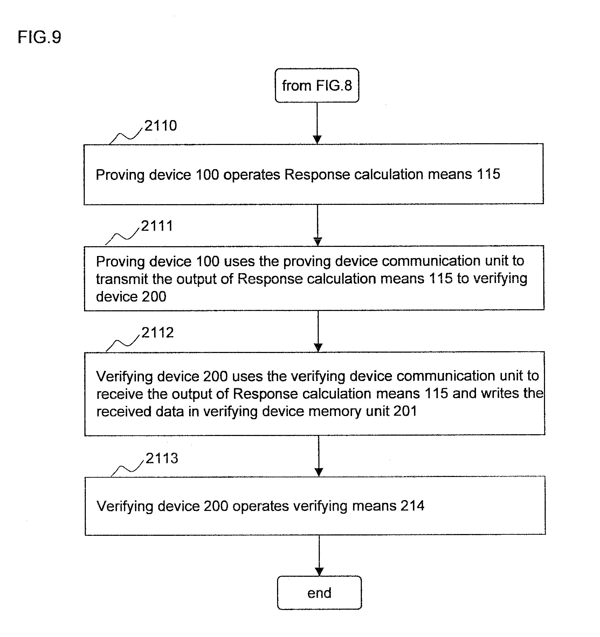

Proving device 100 and verifying device 200 carry out transmission and reception of data in the order of Prot2-1, ..., Pro2-13 as described hereinbelow. FIGs. 8 and 9 are flow charts showing the procedures for transmitting and receiving data.
Prot2-1: Verifying device 200 operates Challenge-Commit calculation means 210 (Step 2101).
Prot2-2: Verifying device 200 uses the verifying device communication unit to transmit the output of Challenge-Commit calculation means 210 to proving device 100 (Step 2102).
Prot2-3: Proving device 100 uses the proving device communication unit to receive the output of Challenge-Commit calculation means 210 and writes the received data to proving device memory unit 101 (Step 2103).
Prot2-4: Proving device 100 operates Commit calculation means 114 (Step 2104).
Prot2-5: Proving device 100 uses the proving device communication unit to transmit the output of Commit calculation means 114 to verifying device 200 (Step 2105).
Prot2-6: Verifying device 200 uses the verifying device communication unit to receive the output of Commit calculation means 114 and writes the received data to verifying device memory unit 201 (Step 2106).
Prot2-7: Verifying device 200 operates Challenge calculation means 213 (Step 2107).
Prot2-8: Verifying device 200 uses the verifying device communication unit to transmit the output of Challenge calculation means 213 to proving device 100 (Step 2108).
Prot2-9: Proving device 100 uses the proving device communication unit to receive the output of Challenge calculation means 213 and writes the received data in proving device memory unit 101 (Step 2109).
Prot2-10: Proving device 100 operates Response calculation means 115 (Step 2110).
Prot2-11: Proving device 100 uses the proving device communication unit to transmit the output of Response calculation means 115 to verifying device 200 (Step 2111).
Prot2-12: Verifying device 200 uses the verifying device communication unit to receive the output of Response calculation means 115 and writes the received data in verifying device memory unit 201 (Step 2112).
Prot2-13: Verifying device 200 operates verifying means 214 (Step 2113).

### Challenge-Commit calculation means 210:

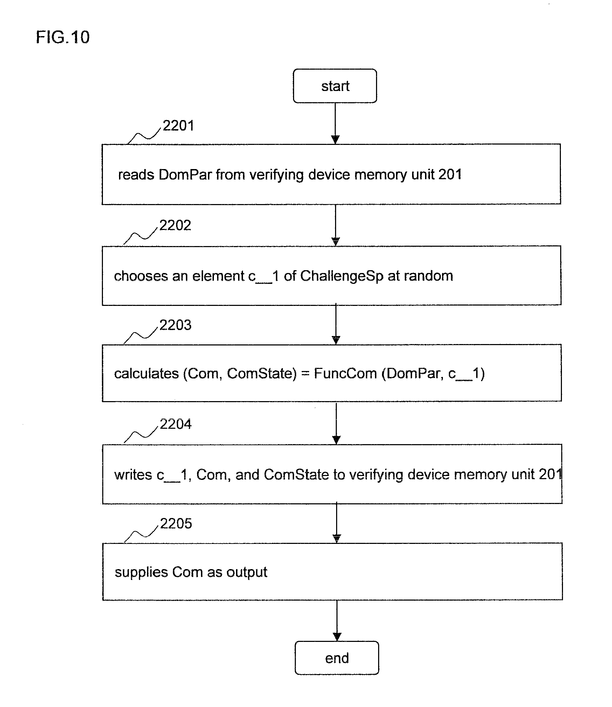

Verifying device 200 operates the means ChaCom 2-1, ..., ChaCom2-5 described below. FIG. 10 is a flow chart showing the procedure of Challenge-Commit calculation means 210.
ChaCom2-1: DomPar is read from verifying device memory unit 201 (Step 2201).
ChaCom2-2: An element c_1 of ChallengeSp is chosen at random (Step 2202).
ChaCom2-3: (Com, ComState) = FuncCom (DomPar, c_1) is calculated (Step 2203).
ChaCom2-4: c_1, Com, and ComState are written to verifying device memory unit 201 (Step 2204).
ChaCom2-5: Com is supplied as output (Step 2205).

### Commit calculation means 114:

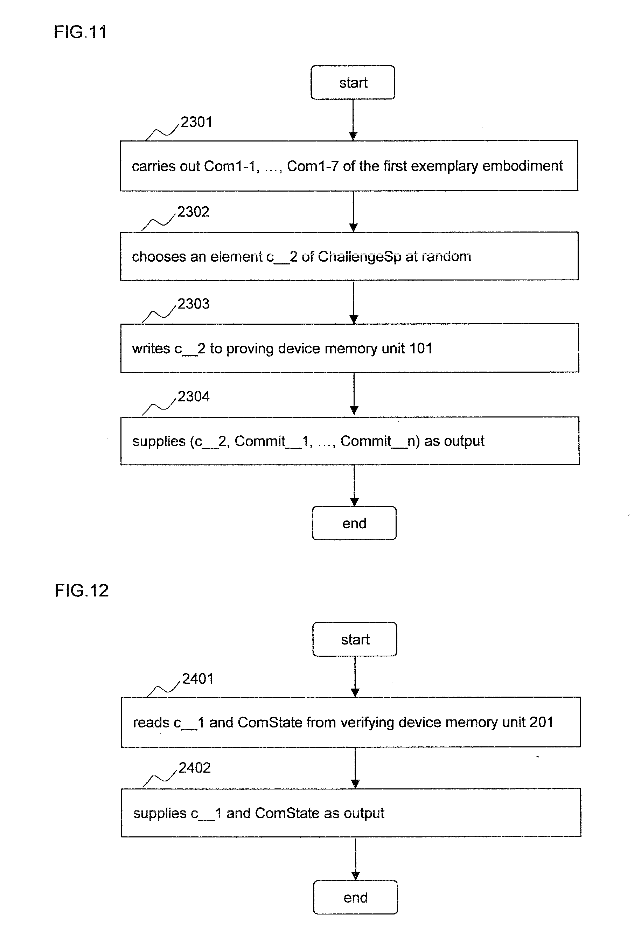

Proving device 100 operates the means Com2-1, ..., Com2-4 described below. FIG. 11 is a flow chart showing the procedure of Commit calculation means 114.
Com2-1: Com1-1, ..., Com1-7 of the first exemplary embodiment are carried out (Step 2301).
Com2-2: An element c_2 of ChallengeSp is chosen at random (Step 2302).
Com2-3: c_2 is written to proving device memory unit 101 (Step 2303).
Com2-4: (c_2, Commit_1, ..., Commit_n) are supplied as output (Step 2304).

### Challenge calculation means 213:

Verifying device 200 operates the means Cha2-1 and Cha2-2 described below. FIG. 12 is a flow chart showing the procedure of Challenge calculation means 213.
Cha2-1: c_1 and ComState are read from verifying device memory unit 201 (Step 2401).
Cha2-2: c_1 and ComState are supplied as output (Step 2402).

### Response calculation means 115:

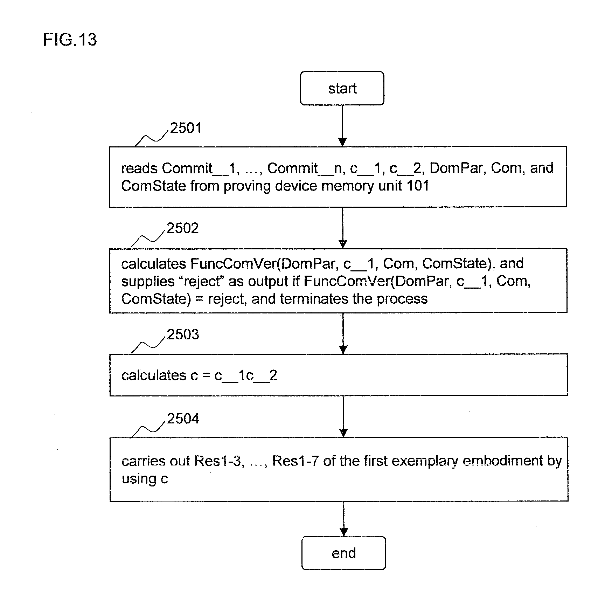

Proving device 100 operates the means Res2-1, ..., Res2-7 described below in order. FIG. 13 is a flow chart showing the procedure of Response calculation means 115.
Res2-1: Commit_1, ..., Commit_n, c_1, c_2, DomPar, Com, and ComState are read from proving device memory unit 101 (Step 2501).
Res2-2: FuncComVer(DomPar, c_1. Com, ComState) is calculated, and if FuncComVer(DomPar, c_1, Com, ComState) = reject, "reject" is supplied as output and the process terminates (Step 2502).
Res2-3: c = c_1c_2 is calculated (Step 2503).
Res2-4: c is used to carry out Res1-3, ..., Res1-7 of the first exemplary embodiment (Step 2504).

### Verifying means 214:

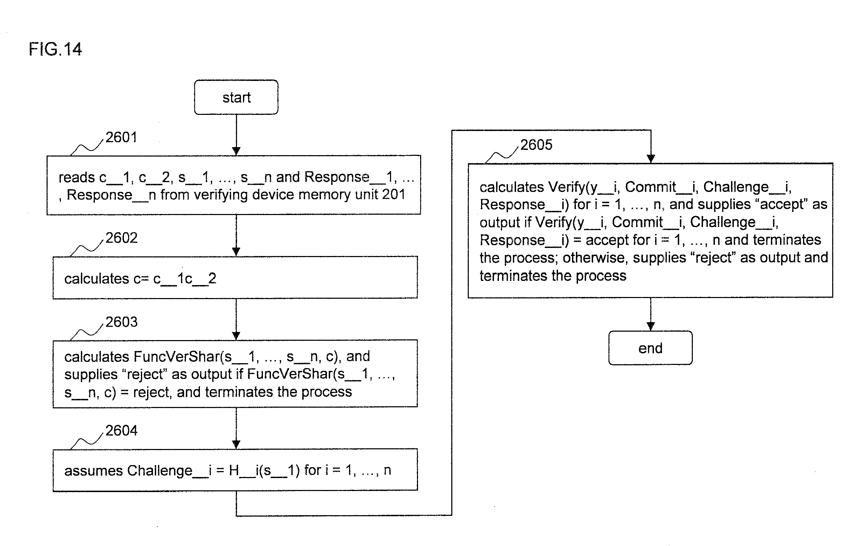

Verifying device 200 operates the means Ver2-1, ..., Ver2-5 described below. FIG. 14 is a flow chart showing the procedure of verifying means 214.
Ver2-1: c_1, c_2, s_1, ..., s_n and Response_1, ... , Response_n are read from verifying device memory unit 201 (Step 2601).
Ver2-2: c= c_1c_2 is calculated (Step 2602).
Ver2-3: FuncVerShar(s_1, ..., s_n, c) is calculated, and if FuncVerShar(s_1, ..., s_n, c) = reject, "reject" is supplied as output and the process terminates (Step 2603).
Ver2-4: Challenge_i = H_i(s_1) is assumed for i = 1, ... , n (Step 2604). Ver2-5: Verify(y_i, Commit_i, Challenge_i, Response_i) is calculated for i = 1, ..., n. If Verify(y_i, Commit_i, Challenge_i, Response_i) = accept for i = 1, ..., n, "accept" is supplied as output and the process terminates; otherwise, "reject" is supplied as output and the process terminates (Step 2605).

In the present exemplary embodiment, in addition to the effect of the first exemplary embodiment, verifying device 200 operates Challenge-Commit calculation means 210 before receiving information from proving device 100 to suppress the influence of information from proving device 100 when choosing data and thus improves the concealment of the secret information stored in proving device 100.

### Third exemplary embodiment

### Device configuration:

Explanation next regards the configuration of the proof verification system of the present exemplary embodiment. Detailed explanation of configuration that is equivalent to that of the first exemplary embodiment is here omitted.

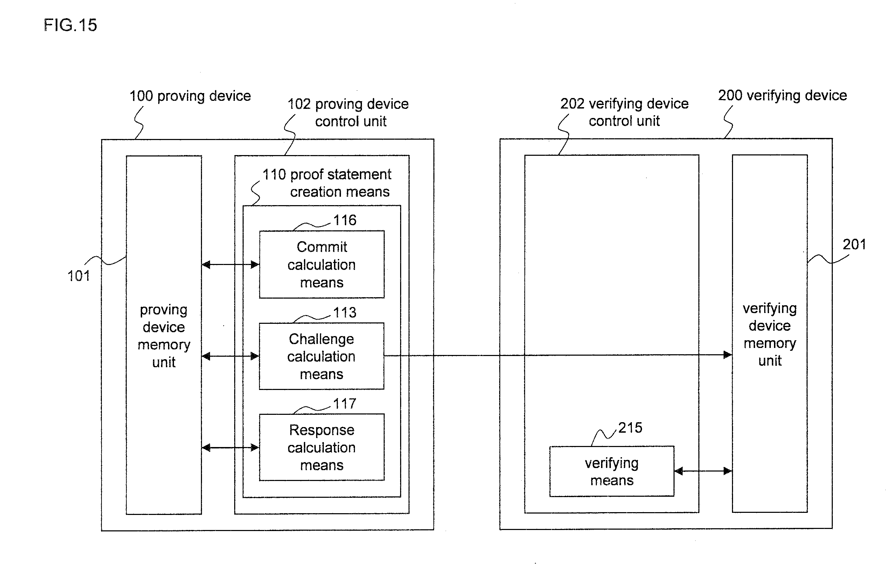

FIG. 15 is a block diagram showing an example of the configuration of the proof verification system of the present exemplary embodiment.
As shown in FIG. 15, the proof verification system includes: proving device 100 for carrying out proofs, and verifying device 200 for carrying out verification. Proving device 100 and verifying device 200 are communicably connected by way of a communication network (not shown).
Proving device 100 includes proving device control unit 102, proving device memory unit 101, and proving device communication unit (not shown). Proving device control unit 102 is provided with proof statement creation means 110. Proof statement creation means 110 includes Commit calculation means 116, Challenge calculation means 113, and Response calculation means 117. Verifying device 200 includes verifying device control unit 202, verifying device memory unit 201, and verifying device communication unit (not shown). Verifying device control unit 202 is of a configuration that includes verifying means 215.

### Device packaging:

The control unit of each device is provided with a CPU for executing prescribed processes in accordance with a program and a memory for storing programs. Commit calculation means 116, Response calculation means 117, Challenge calculation means 113, and verifying means 215 are configured virtually in a computer through the execution of a program by a CPU. The configuration is otherwise equivalent to that of the first exemplary embodiment and detailed explanation is therefore here omitted.

### Symbols:

The same symbols are used as in the first exemplary embodiment. HashCha is a hash function that takes the value of SharSp. In addition, M is a bit string.

Proving device 100 and verifying device 200 share M in advance. The method by which M is shared is not of importance. M is set to various values in accordance with the purpose through preparatory input. An empty string may also be chosen as M. M can be set to, for example, the following 1, ..., 6:
1. (y_1, ..., y_n)
2. The ID of the prover
3. The ID of the verifier
4. Time
5. Some type of message
6. The linking of all or a portion of 1, ..., 5

### Premises regarding use of the third exemplary embodiment:

Elements x_{i_1}, ..., x_{i_m} of X, elements y_1, ..., y_n of Y, and M are saved in proving device memory unit 101. Elements y_1, ..., y_n of Y and M are saved in verifying device memory unit 201.

### Transmission and reception of data:

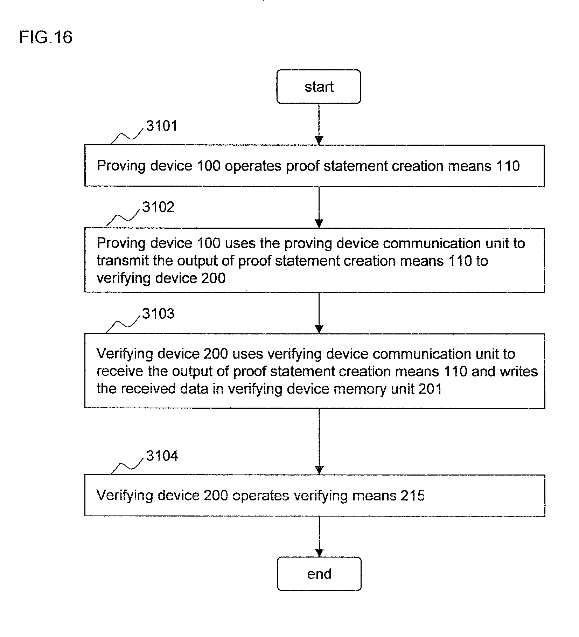

Proving device 100 and verifying device 200 transmit and receive data in the order of Prot3-1, ..., Prot3-4 described below. FIG. 16 is a flow chart showing the procedure of data transmission and reception.
Prot3-1: Proving device 100 operates proof statement creation means 110 (Step 3101).
Prot3-2: Proving device 100 uses the proving device communication unit to transmit the output of proof statement creation means 110 to verifying device 200 (Step 3102).
Prot3-3: Verifying device 200 uses verifying device communication unit to receive the output of proof statement creation means 110 and writes the received data in verifying device memory unit 201 (Step 3103).
Prot3-4: Verifying device 200 operates verifying means 215 (Step 3104).

### Proof statement creation means 110:

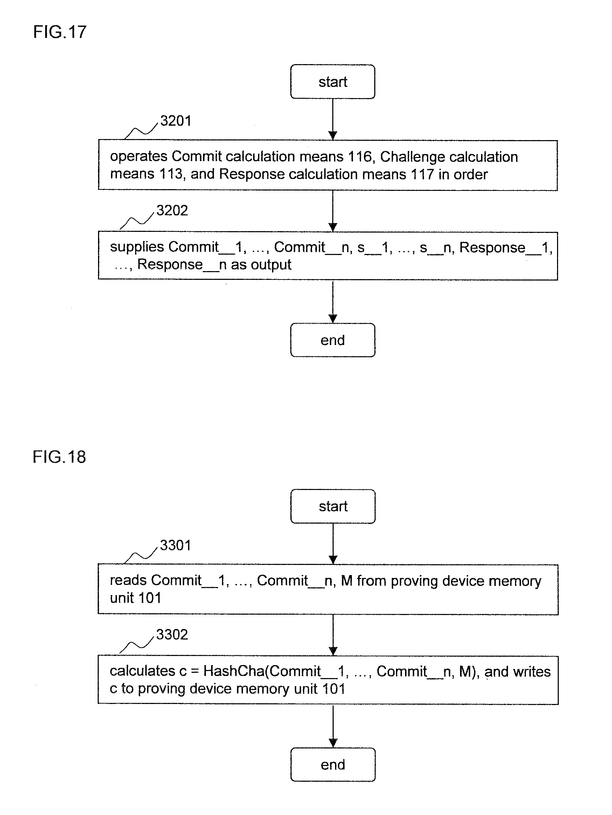

Proving device 100 carries out the means Gen Pf3-1 and GenPf3-2 described below in order. FIG. 17 is a flow chart showing the procedure of proof statement creation means 110.
GenPf3-1: Commit calculation means 116, Challenge calculation means 113, and Response calculation means 117 are operated in order (Step 3201).
GenPf3-2: Commit_1, ..., Commit_n, s_1, ..., s_n, Response_1...., Response_n are supplied as output (Step 3202).

### Commit calculation means 116:

Proving device 100 carries out Com1-1, ..., Com1-7 of Commit calculation means 111 of the first exemplary embodiment.

### Challenge calculation means 113:

Proving device 100 operates the means Cha3-1 and Cha3-2 shown below (FIG. 18).
Cha3-1: Commit_1, ..., Commit_n, M are read from proving device memory unit 101. (Step 3301).
Cha3-2: c = HashCha(Commit_1, ..., Commit_n, M) is calculated, and c is written to proving device memory unit 101 (Step 3302).

### Response calculation means 117:

Proving device 100 carries out Res1-1, ..., Res1-6 of Response calculation means 112 of the first exemplary embodiment.

### Verifying means 215:

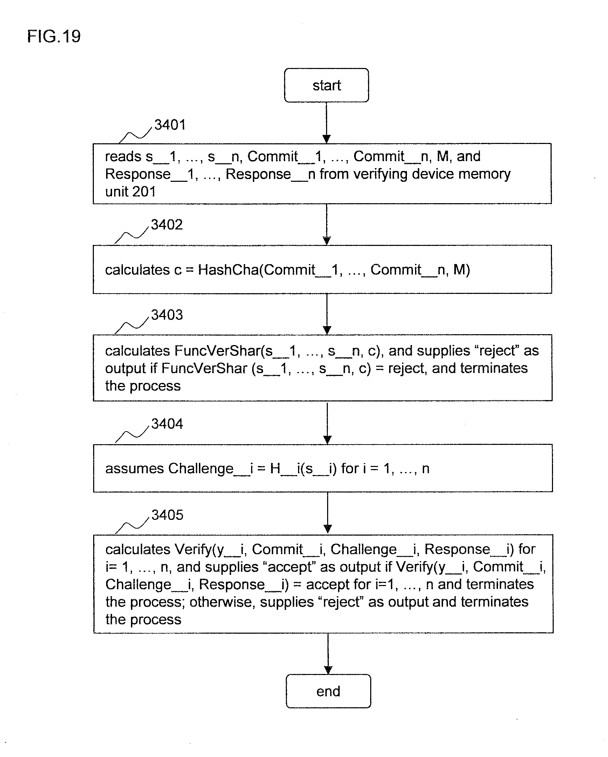

Verifying device 200 operates the means Ver3-1, ..., Ver3-5 described below. FIG. 19 is a flow chart showing the procedure of verifying means 215.
Ver3-1: s_1, ..., s_n, Commit_1, ..., Commit_n, M, and Response_1, ..., Response_n are read from verifying device memory unit 201 (Step 3401). Ver3-2: c = HashCha(Commit_1, ..., Commit_n, M) is calculated (Step 3402). Ver3-3: FuncVerShar(s_1, ..., s_n, c) is calculated, and if FuncVerShar (s_1, ..., s_n, c) = reject, "reject" is supplied as output and the process terminates (Step 3403).
Ver3-4: Challenge_i = H_i(s_i) is assumed for i = 1, ... , n (Step 3404). Ver3-5: Verify(y_i, Commit_i, Challenge_i, Response_i) is calculated for i= 1, ..., n. If Verify(y_i, Commit_i, Challenge_i, Response_i) = accept for i=1, ... , n, then "accept" is supplied as output and the process terminates; otherwise, "reject" is supplied as output and the process terminates (Step 3405).

In addition to the effect of the first exemplary embodiment, the present exemplary embodiment is improved such that the operation of Challenge calculation means 113 in proving device 100 is unaffected by Commit calculation means 116, whereby the concealment of the secret information of proving device 100 can be enhanced and the number of communications between proving device 100 and verifying device 200 can be decreased.

In addition, the proof verification method described in the first to third exemplary embodiments may be applied to programs for causing execution by a computer.

Regarding the proof verification system of the present invention, the proving device and verifying device, the proof verification method, and a program for causing a computer to execute this method, proof of knowledge schemes can be used as components when creating various encryption protocols, and can be applied to authentication schemes or signature schemes.

In addition, the present invention is not limited to the above-described embodiments and is open to various modifications within the scope of the invention, and these modifications of course are included within the scope of the present invention.

## Claims

1. A proof verification system comprising:
a proving device that includes: a proving device memory unit that stores m (m<n) items of secret data x_{i_1}, ..., x_{i_m} of n items of secret data, elements y_1, ..., y_n of a set, and data of a cyclic group containing n elements; and a proving device control unit for taking identifiers that differ from any of identifiers i_1, ..., i_m for said n items of secret data as j_1, ..., j_p (where p = n-m), randomly choosing elements s_{j_1}, ..., s_{j_p} of said cyclic group from said proving device memory unit, taking values realized by a hash function of each of s_{j_v} for v=1, ..., p as challenge value Challenge_{j_v}, and carrying out a simulation of a zero-knowledge proof that takes as input said y_{j_v} and said Challenge_{j_v} for v=1, ..., p to generate sets of Commit values and Response values (Commit_{j_1}, Response_{j_1}), ..., (Commit_{j_p}, Response_{j_p}), using x_{i_u} and y_{i_u} for u=1, ..., m to generate Commit value Commit_{i_u}, transmitting to the outside Commit values Commit_1, ..., Commit_n composed of said Commit_{j_1}, ..., Commit__{j_p} and said Commit_{i_1}, ..., Commit_{i_m}, upon receiving Challenge value c from the outside, generating the remaining elements s_{i_1}, ..., s_{i_m} from the Challenge value c and said s_{j_1}, ..., s_{j_p}, taking the hash value at each s_i for i=1, ..., n as a Challenge value Challenge_i, using said y_i, said Commit_i, and said Challenge_i to calculate Response value Response_i, and transmitting to the outside elements s_1, ..., s_n and Response values Response_1, ..., Response_n; and
a verifying device that is communicably connected to said proving device and that includes: a verifying device memory unit that stores a plurality of random numbers and elements y_1, ..., y_n of said set; and a verifying device control unit for: upon receiving Commit values Commit_1, ..., Commit_n from said proving device, transmitting c that is chosen from said plurality of random numbers as a Challenge value to said proving device, upon receiving elements s_1, ..., s_n of said cyclic group and Response values Response_1, ..., Response_n from said proving device, verifying whether s_1, ..., s_n is secret sharing that has been generated from said Challenge value c by a proper method or not, and if proper, taking hash values of said s_i for i=1, ..., n as Challenge value Challenge_i, verifying whether the proof statement resulting from the set (Commit_i, Challenge_i, Response_i) is a proper proof statement of said y_i or not, and accepting the proof by said proving device if proper and not accepting the proof by said proving device if not proper.

2. A proof verification system comprising:
a proving device that includes: a proving device memory unit that stores m (m<n) items of secret data x_{i_1}, ..., x_{i_m} of n items of secret data, elements y_1, ..., y_n of a set, data of a cyclic group containing n elements, and data of a group that contains a plurality of elements; and a proving device control unit for: taking identifiers that differ from any of identifiers i_1, ..., i_m for said n items of secret data as j_1, ..., j_p (where p = n-m), upon receiving Commit value Com from the outside, storing the Commit value Com in said proving device memory unit, randomly choosing elements s_{j_1}, ..., s_{j_p} of said cyclic group from said proving device memory unit, taking values realized by a hash function of each of s_{j_v} for v=1, ..., p as Challenge value Challenge_{j_v}, and carrying out a simulation of a zero-knowledge proof that takes as input said elements y_{j_v} and said Challenge_{j_v} for v=1, ..., p to generate sets of Commit values and Response values (Commit_{j_1}, Response_{j_1}), ..., (Commit_{j_p}, Response_{j_p}), using x_{i_u} and y_{i_u} for u=1, ..., m to generate Commit value Commit_{i_u}, finding Commit values Commit_1, ..., Commit_n that are composed of said Commit_{j_1}, ..., Commit_{j_p} and said Commit_{i_1}, ..., Commit_{i_m}, randomly choosing element c_2 from said group that contains a plurality of elements, transmitting to the outside the element c_2 and Commit_1, ..., Commit_n, upon receiving from the outside element c_1 of said group that contains a plurality of elements for calculating said Commit value Com, verifying whether the Commit value Com is a proper commitment of the element c_1 or not, denying continuation of the proof if not proper, but if proper, finding value c obtained by multiplying said c_1 and said c_2, generating the remaining elements s_{i_1}, ..., s_{i_m} from said s_{j_1}, ..., s_{j_p} and the value c, taking the hash value at each s_i for i=1, ..., n as a Challenge value Challenge_i, using said y_i, said Commit_i, and said Challenge_i to calculate Response value Response_i, and transmitting to said verifying device elements s_1, ..., s_n and Response values Response_1, ..., Response_n; and
a verifying device that is communicably connected to said proving device and that includes: a verifying device memory unit that stores data of a group that contains a plurality of elements; and a verifying device control unit for: randomly choosing element c_1 from said group that contains a plurality of elements, calculating Commit value Com of the element c_1 to transmit to said proving device, upon receiving element c_2 of said group that contains a plurality of element and Commit values Commit_1, ..., Commit_n from said proving device, transmitting said element c_1 to said proving device, upon receiving elements s_1, ..., s_n of the cyclic group and Response values Response_1, ..., Response_n from said proving device, finding a value c obtained by multiplying said c_1 and said c_2, verifying whether s_1, ..., s_n is secret sharing that has been generated from said value c by a proper method or not, if proper, taking hash values of said element s_i for i=1, ..., n as Challenge value Challenge_i, verifying whether the proof statement resulting from the set (Commit_i, Challenge_i, Response_i) is a proper proof statement of said y_i or not, and accepting the proof realized by said proving device if proper and not accepting the proof realized by said proving device if not proper.

3. A proof verification system comprising:
a proving device that includes: a proving device memory unit that stores m (m<n) items of secret data x_{i_1}, ..., x_{i_m} of n items of secret data, elements y_1, ..., y_n of a set, and data of a cyclic group containing n elements; and a proving device control unit for: taking identifiers that differ from any of identifiers i_1, ..., i_m for said n items of secret data as j_1, ..., j_p (where p = n-m), randomly choosing elements s_{j_1}, ..., s_{j_p} of said cyclic group from said proving device memory unit, taking values realized by a hash function of each of s_{j_v} for v=1, ..., p as a Challenge value Challenge_{j_v}, carrying out a simulation of a zero-knowledge proof that takes as input said elements y_{j_v} and said Challenge_{j_v} for v=1, ..., p to generate sets of Commit values and Response values (Commit_{j_1}, Response_{j_1})....,(Commit_{j_p}. Response_{j_p}), using x_{i_u} and y_{i_u} for u=1, ..., m to generate Commit value Commit_{i_u}, finding Commit values Commit_1, ..., Commit_n that are composed of said Commit_{j_1}, ..., Cammit_{j_p} and said Commit_{i_1}, ..., Commit_{i_m}, taking a hash value of data that contain Commit_1, ..., Commit_n as c, generating the remaining elements s_{i_1}, ..., s_{i_m} from the hash value c and said s_{j_1}, ..., s_{j_p}, taking the hash value at each s_i for i=1, ..., n as a Challenge value Challenge_i, using said y_i, said Commit_i, and said Challenge_i to calculate a Response value Response_i, and transmitting to the outside elements s_1, ..., s_n and Response values Response_1, ..., Response_n; and
a verifying device that is communicably connected to said proving device and that includes: a verifying device memory unit that stores elements y_1, ..., y_n of said set; and a verifying device control unit for: upon receiving elements s_1, ..., s_n of said cyclic group, Commit values Commit_1, ..., Commit_n, and Response values Response_1, ..., Response_n from said proving device, taking hash values of data that include Commit_1, ..., Commit_n as value c, verifying whether said s_1, ..., s_n is secret sharing generated by a proper method from the hash value c or not, taking the hash value of said element s_i for i=1, ..., n as a Challenge value Challenge_i if proper, verifying whether the proof statement resulting from the set (Commit_i, Challenge_i, Response_i) is a proper proof statement of said y_i or not, and accepting the proof realized by said proving device if proper and not accepting the proof realized by said proving device if not proper.

4. A proving device that is communicably connected to a verifying device for proving to said verifying device that said proving device holds secret data, said proving device comprising:
a memory unit that stores m (m<n) items of secret data x_{i_1}, ..., x_{i_m} of n items of secret data, elements y_1, ... , y_n of a set, and data of a cyclic group containing n elements; and
a control unit for taking identifiers that differ from any of identifiers i_1, ..., i_m for said n items of secret data as j_1, ..., j_p (where p = n-m), randomly choosing elements s_{j-1}, ..., s_{j_p} of said cyclic group from said memory unit, taking values realized by a hash function of each of s_{j_v} for v=1, ..., p as Challenge value Challenge_{j_v}, and carrying out a simulation of a zero-knowledge proof that takes as input said y_{j_v} and said Challenge_{j_v} for v=1, ..., p to generate sets of Commit values and Response values (Commit_{j_1}, Response_{j_1}), ..., (Commit_{j_p}, Response_{j_p}), using x_{i_u} and y_{i_u} for u=1, ..., m to generate Commit value Commit_{i_u}, transmitting to said verifying device Commit values Commit_1, ..., Commit_n composed of said Commit_{j_1}, ..., Commit_{j_p} and said Commit_{i_1}, ..., Commit_{i_m}, upon receiving Challenge value c from said verifying device, generating the remaining elements s_{i_1}, ..., s_{i_m} from the Challenge value c and said s_{j_1}, ..., s_{j_p}, taking the hash values at each s_i for i=1, ..., n as the Challenge value Challenge_i, using said y_i, said Commit_i, and said Challenge_i to calculate Response value Response_i, and transmitting to said verifying device elements s_1, ..., s_n and Response values Response)_1, ..., Response_n.

5. A verifying device that is communicably connected to a proving device for verifying a proof statement issued by the proving device, said verifying device comprising:
a memory unit that stores a plurality of random numbers and elements y_1, ..., y_n of a set; and
a control unit for: upon receiving Commit values Commit_1, ..., Commit_n from said proving device, transmitting c that is chosen from said plurality of random numbers as a Challenge value to said proving device, upon receiving elements s_1, ..., s_n of a cyclic group and Response values Response_1, ..., Response_n from said proving device, verifying whether s_1, ..., s_n is secret sharing that has been generated from said Challenge value c by a proper method or not, if proper, taking hash values of said s_i for i=1, ..., n as Challenge value Challenge_i, verifying whether the proof statement resulting from the set (Commit_i, Challenge_i, Response_i) is a proper proof statement of said y_i or not, and accepting the proof realized by said proving device if proper and not accepting the proof realized by said proving device if not proper.

6. A proving device that is communicable connected to a verifying device for proving to the verifying device that said proving device holds secret data, said proving device comprising:
a memory unit that stores m (m<n) items of secret data x_{i_1}, ..., x_{i_m} of n items of secret data, elements y_1, ..., y_n of a set, data of a cyclic group containing n elements, and data of a group that contains a plurality of elements; and
a control unit for: taking identifiers that differ from any of identifiers i_1, ..., i_m for said n items of secret data as j_1, ..., j_p (where p = n-m), upon receiving Commit value Com from said verifying device, storing Com in said memory unit, randomly choosing elements s_{j_1}, ..., s_{j_p} of said cyclic group from said memory unit, taking values realized by a hash function of each of s_{j_v} for v=1, ..., p as Challenge value Challenge_{j_v}, and carrying out a simulation of a zero-knowledge proof that takes as input said elements y_{j_v} and said Challenge_{j_v} for v=1, ..., p to generate sets of Commit values and Response values (Commit_{j_1}, Response_{j_1}), ..., (Commit_{j_p}, Response_{j_p}), using x_{i_u} and y_{i_u} for u=1, ..., m to generate Commit value Commit_{i_u}, finding Commit values Commit_1, ..., Commit_n that are composed of said Commit_{j_1}, ..., Commit_{j_p} and said Commit_{i_1}, ..., Commit_{i_m}, randomly choosing element c_2 from said group that contains a plurality of elements, transmitting to said verifying device the c_2 and Commit_1, ... , Commit_n, upon receiving from said verifying device element c_1 of said group that contains a plurality of elements for calculating said Com, verifying whether the Commit value Com is a proper commitment of said c_1 or not, denying continuation of the proof if not proper, but if proper, finding value c obtained by multiplying said c_1 and said c_2, generating the remaining elements s_{i_1}, ..., s_{i_m} from said s_{j_1}, ..., s_{j_p} and said c, taking the hash value at each s_i for i=1, ..., n as a Challenge value Challenge_i, using said y_i, said Commit_i, and said Challenge_i to calculate Response value Response_i, and transmitting to said verifying device elements s_1, ..., s_n and Response values Response_1, ..., Response_n.

7. A verifying device that is communicably connected to a proving device for verifying a proof statement issued by said proving device, said verifying device comprising:
a memory unit that stores data of a group that contains a plurality of elements and elements y_1, ..., y_n of a set; and
a control unit for: randomly choosing element c_1 from said group that contains a plurality of elements, calculating Commit value Com of the element c_1 to transmit to said proving device, upon receiving element c_2 of said group that contains a plurality of elements and Commit values Commit_1, ..., Commit_n from said proving device, transmitting said c_1 to said proving device, upon receiving elements s_1, ..., s_n of a cyclic group and Response values Response_1, ..., Response_n from said proving device, finding a value c obtained by multiplying said c_1 and said c_2, verifying whether s_1, ..., s_n is secret sharing that has been generated from said c by a proper method or not, if proper, taking hash values of said element s_i for i=1, ..., n as Challenge value Challenge_i, verifying whether the proof statement resulting from the set (Commit_i, Challenge_i, Response_i) is a proper proof statement of said y_i or not, and accepting the proof realized by said proving device if proper and not accepting the proof realized by said proving device if not proper.

8. A proving device that is communicably connected to a verifying device for proving to said verifying device that said proving device holds secret data, said proving device comprising:
a memory unit that stores m (m<n) items of secret data x_{i_1}, ..., x_{i_m} of n items of secret data, elements y_1, ..., y_n of a set, and data of a cyclic group containing n elements; and
a control unit for: taking identifiers that differ from any of identifiers i_1, ..., i_m for said n items of secret data as j_1, ..., j_p (where p = n-m), randomly choosing elements s_{j_1}, ..., s_{j_p} of said cyclic group from said memory unit, taking values realized by a hash function of each of s_{j_v} for v=1, ..., p as a Challenge value Challenge_{j_v}, and carrying out a simulation of a zero-knowledge proof that takes as input said elements y_{j_v} and said Challenge_{j_v} for v=1, ..., p to generate sets of Commit values and Response values (Commit_{j_1}, Response_{j_1}), ..., (Commit_{j_p}, Response_{j_p}), using x_{i_u} and y_{i_u} for u=1, ..., m to generate Commit value Commit_{i_u}, finding Commit values Commit_1, ..., Commit_n that are composed of said Commit_{j_1}, ..., Commit_{j_p} and said Commit_{i_1}, ..., Commit_{i_m}, taking a hash value of data that contain said Commit_1, .... Commit_n as c, generating the remaining elements s_{i_1}, ..., s_{i_m} from said c and said s_{j_1}, ..., s_{j_p}, taking the hash value at each s_i for i=1, ..., n as a Challenge value Challenge_i, using said y_i, said Commit_i, and said Challenge_i to calculate a Response value Response_i, and transmitting to said verifying device elements s_1, ..., s_n and Response values Response_1, ..., Response_n.

9. A verifying device that is communicable connected to a proving device for verifying a proof statement issued by said proving device, said verifying device comprising:
a memory unit that stores elements y_1, ..., y_n of a set; and
a control unit for: upon receiving elements s_1, .... s_n of a cyclic group, Commit values Commit_1, ..., Commit_n, and Response values Response_1, ..., Response_n from said proving device, taking hash values of data that include Commit_1, ..., Commit_n as c, verifying whether said s_1, ..., s_n is secret sharing generated by a proper method from said c or not, if proper, taking the hash value of said element s_i for i=1, ..., n as a Challenge value Challenge_i, verifying whether the proof statement resulting from the set (Commit_i, Challenge_i, Response_i) is a proper proof statement of said y_i or not, and accepting the proof realized by said proving device if proper and not accepting the proof realized by said proving device if not proper.

10. A proof verification method, being implemented by a proving device that issues a proof statement, and a verifying device that is communicable connected to said proving device for verifying said proof statement; wherein:
said proving device stores m (m<n) items of secret data x_{i_1}, ..., x_{i_m} of n items of secret data, elements y_1, ..., y_n of a set, and data of a cyclic group containing n elements;
said verifying device stores a plurality of random numbers and elements y_1, ..., y_n of said set;
said proving device takes identifiers that differ from any of identifiers i_1, ..., i_m for said n items of secret data as j_1, ..., j_p (where p = n-m), randomly chooses elements s_{j_1}, .... s_{j_p} of said cyclic group, takes values realized by a hash function of each of s_{j_v} for v=1, ..., p as Challenge value Challenge_{j_v}, and carries out a simulation of a zero-knowledge proof that takes as input said y_{j_v} and said Challenge_{j_v} for v=1, ..., p to generate sets of Commit values and Response values (Commit_{j_1}, Response_{j_1}), ..., (Commit_{j_p}, Response_{j_p}), uses x_{i_u} and y_{i_u} for u=1, ..., m to generate Commit value Commit_{i_u}, and transmits to said verifying device Commit values Commit_1, ..., Commit_n composed of said Commit_{j_1}, ..., Commit_{j_p} and said Commit_{i_1}, ..., Commit_{i_m};
said verifying device, upon receiving Commit values Commit_1, ..., Commit_n from said proving device, transmits c that is chosen from said plurality of random numbers as a Challenge value to said proving device;
said proving device, upon receiving said Challenge value c from said verifying device, generates the remaining elements s_{i_1}, ..., s_{i_m} from the Challenge value c and said s_{j_1}, ..., s_{j_p}, takes the hash value at each s_i for i=1, ..., n as a Challenge value Challenge_i, uses said y_i, said Commit_i, and said Challenge_i to calculate Response value Response_i, and transmits to said verifying device elements s_1, ..., s_n and Response values Response_1, ..., Response_n; and
said verifying device, upon receiving said elements s_1, ..., s_n and Response values Response_1, ..., Response_n from said proving device, verifies whether s_1, ..., s_n is secret sharing that has been generated from said Challenge value c by a proper method or not, and if proper, takes a hash value of said s_i for i=1, ..., n as a Challenge value Challenge_i, verifies whether the proof statement resulting from the set (Commit_i, Challenge_i, Response_i) is a proper proof statement of said y_i or not, and accepts the proof realized by said proving device if proper and does not accept the proof realized by said proving device if not proper.

11. A proof verification method, being implemented by a proving device that issues a proof statement, and a verifying device that is communicably connected to said proving device for verifying said proof statement; wherein:
said proving device stores m (m<n) items of secret data x_{i_1}, ..., x_{i_m} of n items of secret data, elements y_1, ..., y_n of a set, data of a cyclic group containing n elements, and data of a group that contains a plurality of elements;
said verifying device stores data of said group that contains a plurality of elements;
said verifying device randomly chooses element c_1 from said group that contains a plurality of elements, and calculates Commit value Com of the element c_1 to transmit to said proving device;
said proving device takes identifiers that differ from any of identifiers i_1, ..., i_m for said n items of secret data as j_1, ..., j_p (where p = n-m), upon receiving said Commit value Com from said verifying device, stores said Com, randomly chooses elements s_{j_1}, ..., s_{j_p} of said cyclic group, takes values realized by a hash function of each of s_{j_v} for v=1, ..., p as Challenge value Chahenge_{j_v}, carries out a simulation of a zero-knowledge proof that takes as input said elements y_{j_v} and said Challenge_{j_v} for v=1, ..., p to generate sets of Commit values and Response values (Commit_{j_1}, Response_{j_1}), ..., (Commit_{j_p}, Response_{j_p}), uses x_{i_u} and y_{i_u} for u=1, ..., m to generate Commit value Commit_{i_u}, finds Commit values Commit_1, ..., Commit_n that are composed of said Commit_{j_1}, .... Commit_{j_p} and said Commit_{i_1}, ..., Commit_{i_m}, randomly chooses element c_2 from said group that contains a plurality of elements, and transmits to said verifying device said c_2 and said Commit_1, ..., Commit_n;
said verifying device, upon receiving said element c_2 and said Commit valuers Commit_1, ..., Commit_n from said proving device, transmits said c_1 to said proving device,
said proving device, upon receiving from said verifying device said element c_1, verifies whether said Commit value Com is a proper commitment of said c_1 or not, denies continuation of the proof if not proper, but if proper, finds c obtained by multiplying said c_1 and said c_2, generates the remaining elements s_{i_1}, ..., s_{i_m} from said s_{j_1}, **...,** s_{j_p} and said c, takes the hash value at each s_i for i=1, ..., n as a Challenge value Challenge_i, uses said y_i, said Commit_i, and said Challenge_i to calculate a Response value Response_i, and transmits to said verifying device elements s_1, ..., s_n and Response values Response_1, ..., Response_n; and
said verifying device, upon receiving said elements s_1, ..., s_n and said Response values Response_1, ..., Response_n from said proving device, finds a value c obtained by multiplying said c_1 and said c_2, verifies whether said s_1, ..., s_n is secret sharing that has been generated from said c by a proper method, if proper, takes hash values of said element s_i for i=1, ..., n as a Challenge value Challenge_i, verifies whether the proof statement resulting from the set (Commit_i, Challenge_i, Response_i) is a proper proof statement or not, accepts the proof realized by said proving device if proper and does not accept the proof realized by said proving device if not proper.

12. A proof verification method, being implemented by a proving device that issues a proof statement, and a verifying device that is communicably connected to said proving device for verifying said proof statement; wherein:
said proving device stores m (m<n) items of secret data x_{i_1}, ..., x_{i_m} of n items of secret data, elements y_1, ..., y_n of a set, and data of a cyclic group containing n elements;
said verifying device stores elements y_1, ..., y_n of said set;
said proving device takes identifiers that differ from any of identifiers i_1, ..., i_m for said n items of secret data as j_1, ..., j_p (where p = n-m), randomly chooses elements s_{j_1}, ..., s_{j_p} of said cyclic group, takes values realized by a hash function of each of s_{j_v} for v=1, ..., p as a Challenge value Challenge_{j_v}, carries out a simulation of a zero-knowledge proof that takes as input said elements y_{j_v} and said Challenge_{j_v} for v=1, ..., p to generate sets of Commit values and Response values (Commit_{j_1}, Response_{j_1}), ..., (Commit_{j_p}, Response_{j_p}), uses x_{i_u} and y_{i_u} for u=1, ..., m to generate Commit value Commit_{i_u}, finds Commit values Commit_1, ..., Commit_n that are composed of said Commit_{j_1}, ..., Commit_{j_p} and said Commit_{i_1}, ..., Commit_{i_m}, takes a hash value of data that contain said Commit,_1, ..., Commit_n as c, generates the remaining elements s_{i_1}, ..., s_{i_m} from said c and said s_{j_1}, ..., s_{j_p}, takes the hash value at each s_i for i=1, ..., n as a Challenge value Challenge_i, uses said y_i, said Commit_i, and said Challenge_i to calculate a Response value Response_i, and transmits to said verifying device elements s_1, ... , s_n and Response values Response_1, ..., Response_n; and
said verifying device, upon receiving said elements s_1, ..., s_n, said Commit values Commit_1, ..., Commit_n, and said Response values Response_1, ..., Response_n from said proving device, takes Hash values of data that include said Commit_1, ..., Commit_n as c, verifies whether said s_1, ..., s_n is secret sharing generated by a proper method from said c or not, if proper, takes the hash value of said element s_i for i=1, ..., n as a Challenge value Challenge_i, verifies whether the proof statement resulting from the set (Commit_i, Challenge_i, Response_i) is a proper proof statement of said y_i or not, accepts the proof realized by said proving device if proper and does not accept the proof realized by said proving device if not proper.

13. A program for causing a computer being communicably connected to a verifying device and proving to said verifying device that said computer holds secret data, to execute processes of:
storing m (m<n) items of secret data x_{i_1}, ..., x_{i_m} of n items of secret data, elements y_1, ..., y_n of a set, and data of a cyclic group containing n elements;
taking identifiers that differ from any of identifiers i_1, ..., i_m for said n items of secret data as j_i, ..., j_p (where p = n-m), randomly choosing elements s_{j_1}, ..., s_{j_p} of said cyclic group, and taking values realized by a hash function of each of s_{j_v} for v=1, ..., p as a Challenge value Challenge_{j_v};
carrying out a simulation of a zero-knowledge proof that takes as input said y_{j_v} and said Challenge_{j_v} for v=1, ..., p to generate sets of Commit values and Response values (Commit_{j_1}, Response_{j_1}), ..., (Commit_{j_p}, Response_{j_p});
using x_{i_u} and y_{i_u} for u=1, ..., m to generate Commit value Commit_{i_u}, and transmitting to said verifying device Commit values Commit_1, ..., Commit_n composed of said Commit_{j_1}, ..., Commit_{j_p} and said Commit_{i_1}, ..., Commit_{i_m}; and
upon receiving Challenge value c from said verifying device, generating the remaining elements s_{i_1}, ..., s_{i_m} from said Challenge value c and said s_{j_1}, ..., s_{j_p};
taking the hash value at each s_i for i=1, ..., n as a Challenge value Challenge_i;
using said y_i, said Commit_i, and said Challenge_i to calculate a Response value Response_i, and transmitting to said verifying device elements s_1, ..., s_n and Response values Response_1, ..., Response_n.

14. A program for causing a computer being communicably connected to a proving device and verifying a proof statement that is issued by said proving device, to execute processes of:
storing a plurality of random numbers and elements y_1, ..., y_n of a set;
upon receiving Commit values Commit_1, ..., Commit_n from said proving device, transmitting c that is chosen from said plurality of random numbers as a Challenge value to said proving device;
upon receiving elements s_1, ..., s_n of a cyclic group and Response values Response_1, ..., Response_n from said proving device, verifying whether s_1, ..., s_n is secret sharing that has been generated from said Challenge value c by a proper method or not; and
if said s_1, ..., s_n is secret sharing generated from said Challenge value c by a proper method, taking a hash value of said s_i for i=1, ..., n as a Challenge value Challenge_i, verifying whether the proof statement resulting from the set (Commit_i, Challenge_i, Response_i) is a proper proof statement of said y_i or not, accepting the proof realized by said proving device if proper, and not accepting the proof realized by said proving device if not proper.

15. A program for causing a computer being communicable connected to a verifying device and proving to said verifying device that said computer holds secret data, to execute processes of:
storing m (m<n) items of secret data x_{i_1}, ..., x_{i_m} of n items of secret data, elements y_1, ..., y_n of a set, data of a cyclic group containing n elements, and data of a group that contains a plurality of elements;
taking identifiers that differ from any of identifiers i_1, ..., i_m for said n items of secret data as j_1, ..., j_p (where p = n-m), and upon receiving Commit value Com from said verifying device, storing Com;
randomly choosing elements s_{j_1}, ..., s_{j_p} of said cyclic group, taking values realized by a hash function of each of s_{j_v} for v=1, ... , p as a Challenge value Challenge_{j_v};
carrying out a simulation of a zero-knowledge proof that takes as input said elements y_{j_v} and said Chaiienge_{j_v} for v=1, ..., p to generate sets of Commit values and Response values (Commit_{j_1}, Response_{j_1}), ..., (Commit_{j_p}, Response_{j_p});
using x_{i_u} and y_{i_u} for u=1, ..., m to generate Commit value Commit_{i_u}, finding Commit values Commit_1, ..., Commit_n that are composed of said Commit_{j_1}, ..., Commit_{j_p} and said Commit_{i_1}, ..., Commit_{i_m}, randomly choosing element c_2 from said group that contains a plurality of elements, and transmitting to said verifying device said c_2 and said Commit_1, ..., Commit_n;
upon receiving from said verifying device element c_1 of said group that contains a plurality of elements for calculating said Com, verifying whether the Commit value Com is a proper commitment of said c_1 or not; and
denying continuation of the proof if said Commit value Com is not a proper commitment of said c_1, but if said commit value Com is a proper commitment, finding value c obtained by multiplying said c_1 and said c_2, generating the remaining elements s_{i_1}, ..., s_{i_m} from said s_{j_1}, ..., s_{j_p} and said c, taking the hash value at each s_i for i=1, ..., n as a Challenge value Challenge_i, using said y_i, said Commit_i, and said Challenge_i to calculate a Response value Response_i, and transmitting to said verifying device elements s_1, ..., s_n and Response values Response_1, ..., Response_n.

16. A program for causing a computer being communicably connected to a proving device and verifying a proof statement that is issued by said proving device, to execute processes of:
storing data of a group that contains a plurality of elements and elements y_1, ..., y_n of a set;
randomly choosing element c_1 from said group that contains a plurality of elements, and calculating Commit value Com of said element c_1 to transmit to said proving device;
upon receiving element c_2 of said group that contains a plurality of elements and Commit values Commit_1, ..., Commit_n from said proving device, and transmitting said c_1 to said proving device;
upon receiving elements s_1, ..., s_n of a cyclic group and Response values Response_1, ..., Response_n from said proving device, finding c obtained by multiplying said c_1 and said c_2, and verifying whether s_1, ..., s_n is secret sharing that has been generated from said c by a proper method or not; and
if said s_1, ..., s_n is secret sharing generated from said c by a proper method, taking hash values of said element s_i for i=1, ..., n as a Challenge value Challenge_i, verifying whether the proof statement resulting from the set (Commit_i, Challenge_i, Response_i) is a proper proof statement or not, accepting the proof realized by said proving device if proper, and not accepting the proof realized by said proving device if not proper.

17. A program for causing a computer being communicably connected to a verifying device and proving to said verifying device that said computer holds secret data, to execute processes of:
storing m (m<n) items of secret data x_{i_1}, ..., x_{i_m} of n items of secret data, elements y_1, ..., y_n of a set, and data of a cyclic group containing n elements;
taking identifiers that differ from any of identifiers i_1, ..., i_m for said n items of secret data as j_1, ..., j_p (where p = n-m), randomly choosing elements s_{j_1}, ..., s_{j_p} of said cyclic group, and taking values realized by a hash function of each of s_{j_v} for v=1, ..., p as a Challenge value Challenge_{j_v};
carrying out a simulation of a zero-knowledge proof that takes as input said elements y_{j_v} and said Challenge_{j_v} for v=1, ..., p to generate sets of Commit values and Response values (Commit_{j_1}, Response_{j_1}), ..., (Commit_{j_p}, Response_{j_p}); and
using x_{i_u} and y_{i_u} for u=1, ... , m to generate Commit value Commit_{i_u}, finding Commit values Commit_1, ..., Commit_n that are composed of said Commit_{j_1}, ..., Commit_{j_p} and said Commit_{i_1}, ..., Commit_{i_m}, taking a hash value of data that contain said Commit_1, ..., Commit_n as c, generating the remaining elements s_{i_1}, ..., s_{i_m} from said c and said s_{j_1}, ..., s_{j_p}, taking the hash value at each s_i for i=1, ..., n as a Challenge value Challenge_i, using said y_i, said Commit_i, and said Challenge_i to calculate a Response value Response_i, and transmitting to said verifying device elements s_1, ..., s_n and Response values Response_1, ..., Response_n.

18. A program for causing a computer being communicably connected to a proving device and verifying a proof statement that is issued by said proving device, to execute processes of:
storing elements y_1, ... , y_n of a set;
upon receiving elements s_1, ..., s_n of a cyclic group, Commit values Commit_1, ..., Commit_n, and Response values Response_1, ..., Response_n from said proving device, taking hash values of data that include said Commit_1, ..., Commit_n as c, and verifying whether said s_1, ..., s_n is secret sharing generated from said c by a proper method or not; and
if said s_1, ..., s_n is secret sharing generated from said c by a proper method, taking the hash value of said element s_i for i=1, ..., n as a Challenge value Challenge_i, verifying whether the proof statement resulting from the set (Commit_i, Challenge_i, Response_i) is a proper proof statement of said y_i or not, accepting the proof realized by said proving device if proper and not accepting the proof realized by said proving device if not proper.
